# EUROPEAN PATENT APPLICATION

(11) **EP 4 391 699 A1**
(43) Date of publication of application: **26.06.2024**
(21) Application number: 22885968.2
(22) Date of filing: 25.10.2022
(51) Int. Cl.: H04W 76/10

(54) **CHANNEL MEASUREMENT METHOD AND APPARATUS**

(30) Priority: 26.10.2021 CN 202111250959
(71) Applicant: Huawei Technologies Co., Ltd., Shenzhen, Guangdong 518129 (CN)
(72) Inventor: WANG, Ting, Shenzhen, Guangdong 518129 (CN); LYU, Yongxia, Shenzhen, Guangdong 518129 (CN); WEI, Dongdong, Shenzhen, Guangdong 518129 (CN); MA, Jianglei, Shenzhen, Guangdong 518129 (CN)
(74) Representative: Thun, Clemens
(86) International application number: PCT/CN2022/127428
(87) International publication number: WO 2023/072091

(57) **Abstract**

The application provides a channel measurement method and an apparatus, and relates to the communication field. The channel measurement method includes: A network device determines first configuration information, and sends the first configuration information. The first configuration information is used to indicate a first device to send a reference signal and indicates a second device to receive the reference signal, and the reference signal is used for channel measurement. The first configuration information includes information about a communication group, the information about the communication group is used to determine the first device and the second device, and the communication group includes the first device and the second device. In this way, control information overheads can be reduced, communication latency during channel measurement between devices can be reduced, and communication performance can be improved.

## Description

The application claims priority to Chinese Patent Application No. 202111250959.7, filed with the China National Intellectual Property Administration on October 26, 2021 and entitled "CHANNEL MEASUREMENT METHOD AND APPARATUS", which is incorporated herein by reference in its entirety.

### TECHNICAL FIELD

The application relates to the communication field, and in particular, to a channel measurement method and an apparatus.

### BACKGROUND

Ultra-reliable and low-latency communication (ultra-reliability low latency communication, URLLC) is one of three main application scenarios of the fifth generation mobile communication technology (5th generation mobile communication technology, 5G). As a breakthrough for the mobile communication industry to enter vertical industries, the URLLC is quite critical to the wide application in fields such as self driving, industrial manufacturing, internet of vehicles, and a smart grid.

The URLLC features low latency and high reliability. The URLLC has a quite large use range, and has different requirements on latency, reliability, and bandwidth in different scenarios. Specifically, the URLLC includes a power automation "three remote" scenario, an internet of vehicles scenario, an industrial manufacturing scenario, and the like. In the industrial manufacturing scenario, requirements on low latency and high reliability are the most challenging.

Currently, when channel measurement is performed between devices and channel state information (channel state information, CSI) is fed back between the devices, there are problems that communication latency is long and communication performance is poor. Consequently, a URLLC requirement cannot be met.

### SUMMARY

Embodiments of the application provide a channel measurement method and an apparatus, to reduce communication latency during channel measurement between devices, and improve communication performance.

To achieve the foregoing objectives, the application uses the following technical solutions.

According to a first aspect, a channel measurement method is provided. The method may be applied to a first communication apparatus. The first communication apparatus is, for example, a network device, and the network device is, for example, an access network device (for example, a base station or a satellite). The channel measurement method includes the following steps: The first communication apparatus determines first configuration information, and sends the first configuration information. The first configuration information is used to indicate a second communication apparatus to send a reference signal (reference signal, RS) and indicate a third communication apparatus to receive the reference signal, and the reference signal is used for channel measurement. The first configuration information includes information about a communication group, the information about the communication group is used to determine the second communication apparatus and the third communication apparatus, and the communication group includes the second communication apparatus and the third communication apparatus.

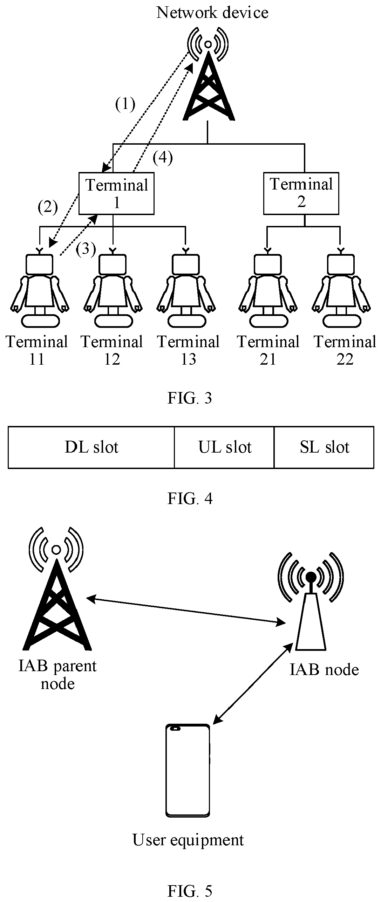

Based on the channel measurement method in the first aspect, it can be learned that the first communication apparatus indicates, by using the first configuration information, the second communication apparatus and the third communication apparatus to perform channel measurement. For example, the second communication apparatus sends the reference signal to the third communication apparatus based on the first configuration information, and the third communication apparatus receives, based on the first configuration information, the reference signal sent by the second communication apparatus, and performs channel measurement. Compared with a current technology (for example, a channel measurement process shown in FIG. 3), the second communication apparatus does not need to indicate the reference signal in sidelink control information (sidelink control information, SCI) and send the SCI to the third communication apparatus, so that control information overheads can be reduced; the third communication apparatus does not need to parse the SCI, so that communication latency can be reduced.

The first communication apparatus may further change the information about the communication group, to change the second communication apparatus and the third communication apparatus that are determined by using the information about the communication group. In other words, the first communication apparatus may indicate, by changing the information about the communication group, different communication groups to perform channel measurement, so that flexible indication of the communication groups and dynamic switching between communication links are implemented, thereby improving communication performance.

Types of the second communication apparatus and the third communication apparatus may be any one of devices such as a base station, a terminal device, a satellite, an integrated access and backhaul (integrated access and backhaul, IAB) node (node), a relay (relay) node, and customer premise equipment (customer premise equipment, CPE). In this way, the first communication apparatus may perform channel measurement by changing the information about the communication group and obtain CSI by changing the information about the communication group, so that communication links between different types of devices are flexibly switched, thereby reducing latency. In addition, the first communication apparatus may centrally schedule resources between the different types of devices. In other words, the communication links may be centrally scheduled, and the resources may be dynamically shared, so that resource utilization efficiency is improved and processing complexity of the terminal device is reduced.

In a possible implementation, the channel measurement method according to the first aspect further includes the following step: The first communication apparatus sends second configuration information, where the second configuration information is used to configure link information. The link information includes at least one of a link (link) number, link type information, a link sending device identifier, and a link receiving device identifier.

In a possible implementation, the information about the communication group includes one or more of the following: a first identifier, a second identifier, link type information, and a link number. The first identifier corresponds to the second communication apparatus, and the second identifier corresponds to the third communication apparatus. In this way, the first communication apparatus may indicate, in a plurality of manners, the second communication apparatus and the third communication apparatus to perform channel measurement, and an indication manner is more flexible.

Optionally, the first identifier is any one of a device-level identifier, a device group-level identifier, or a broadcast-level identifier. The second identifier is any one of a device-level identifier, a device group-level identifier, or a broadcast-level identifier. The device-level identifier may also be referred to as a user equipment (user equipment, UE)-level identifier, and the device group-level identifier may also be referred to as a multicast-level identifier. In this way, a device identifier (including an identifier of the second communication apparatus and an identifier of the third communication apparatus) is set to any one of the device-level identifier, the device group-level identifier, and the broadcast-level identifier, so that flexible switching between a unicast, multicast, and broadcast communication link can be implemented and CSI can be obtained. In addition, the first communication apparatus may flexibly schedule resources for various communication manners, to improve communication performance. In addition, a reference signal sent by one device can be received by a plurality of devices when the device identifier (including the identifier of the second communication apparatus and the identifier of the third communication apparatus) is the device group-level identifier or the broadcast-level identifier, so that reference signal overheads are reduced and communication performance is improved.

In a possible implementation, the information about the communication group includes a reference signal resource identifier, and a correspondence exists between the reference signal resource identifier and the communication group. In other words, the reference signal resource identifier may indicate the information about the communication group, to reduce information overheads.

In a possible implementation, the first configuration information is device-level configuration information or device group-level configuration information.

Optionally, the first configuration information is the device-level configuration information, and the first configuration information includes a sending reference signal resource list and a receiving reference signal resource list. The sending reference signal resource list may be used to indicate to send the reference signal, and the receiving reference signal resource list may be used to indicate to receive the reference signal. In this way, the first configuration information may indicate one or more reference signals that need to be sent by one device and one or more reference signals that need to be received by the device, so that signaling overheads are reduced.

Optionally, the first configuration information is the device group-level configuration information, and the first configuration information is used to indicate at least one second communication apparatus in one group of devices to send the reference signal and indicate at least one third communication apparatus in the group of devices to receive the reference signal. In this way, one piece of first configuration information may indicate a plurality of devices to perform channel measurement, so that signaling overheads are reduced, thereby improving communication performance.

Further, the first configuration information is group radio resource control (radio resource control, RRC) signaling, and the group RRC signaling is carried on a group physical shared channel scheduled by using control information scrambled by using a group identifier; or the first configuration information is group physical layer control information, and the group physical layer control information is scrambled by using a group identifier. In a possible implementation, the group identifier may be a group radio network temporary identifier (group radio network temporary identifier, G-RNTI).

In a possible implementation, the first configuration information further indicates a reference signal resource location. In this way, when determining the first configuration information, the first communication apparatus may further allocate a reference signal resource, so that flexible resource allocation can be implemented while communication latency is reduced, thereby improving communication performance.

In a possible implementation, the first configuration information further includes beam pair information, and the beam pair information indicates a transmit beam corresponding to the reference signal and/or a receive beam corresponding to the reference signal. In this way, the first communication apparatus may flexibly indicate the transmit beam and/or the receive beam of the reference signal, and coordinate global beams, so that interference is reduced, and spatial multiplexing utilization is improved, thereby improving communication performance.

In a possible implementation, the first configuration information further includes a reference signal resource identifier, and the reference signal resource identifier is an identifier obtained through joint numbering of resources between communication groups. That the reference signal resource identifier is an identifier obtained through joint numbering of resources between communication groups may be understood as that reference signal resource identifiers of a plurality of different sending devices corresponding to one receiving device are different. The helps the third communication apparatus compare channel states of different links, and helps the third communication apparatus feed back a communication group with good performance in one or more communication groups that include the third communication apparatus, so that the first communication apparatus is helped to perform communication scheduling, thereby improving communication performance.

In a possible implementation, the first configuration information further includes a reference signal resource identifier, and the reference signal resource identifier is an identifier obtained through independent numbering of resources between communication groups. In this way, the first communication apparatus may configure different reference signal resources for different links, so that the configuration is more flexible; and the third communication apparatus may separately perform measurement feedback for the different links, so that processing complexity is reduced.

In a possible implementation, the channel measurement method according to the first aspect further includes the following step: The first communication apparatus receives CSI sent by the third communication apparatus. In other words, the third communication apparatus may directly feed back the CSI to the first communication apparatus, and the following procedure is not required: The third communication apparatus first sends the CSI to the second communication apparatus, and then the second communication apparatus sends the CSI to the first communication apparatus. In this way, two CSI transmission processes may be reduced to one CSI transmission process, so that feedback information overheads are reduced, and communication latency is reduced, thereby improving communication performance.

Optionally, the CSI sent by the third communication apparatus is CSI with optimal performance in a plurality of reference signals measured by the third communication apparatus. In this way, for a plurality of communication groups that all include the third communication apparatus, the first communication apparatus may determine a communication group with optimal performance in the plurality of communication groups, so that the first communication apparatus is helped to perform communication scheduling, thereby improving communication performance.

Optionally, the CSI sent by the third communication apparatus includes information about a communication group and/or a reference signal resource identifier. In this way, when the CSI sent by the third communication apparatus includes the reference signal resource identifier, and the reference signal resource identifier is the identifier obtained through joint numbering of resources between communication groups, the first communication apparatus may be helped to quickly determine, based on the CSI, a reference signal corresponding to the CSI, and then quickly determines, based on the reference signal corresponding to the CSI and the reference signal resource identifier obtained through joint numbering, a communication group corresponding to the CSI. When the CSI sent by the third communication apparatus includes the information about the communication group and the reference signal resource identifier, and the reference signal resource identifier is the identifier obtained through independent numbering of resources between communication groups, the first communication apparatus may be helped to quickly determine, based on the CSI, a communication group and a reference signal that correspond to the CSI.

In a possible implementation, the reference signal includes a channel state information reference signal (channel state information-reference signal, CSI-RS) and/or a channel sounding reference signal (sounding reference signal, SRS). Optionally, the reference signal may be another reference signal, for example, a reference signal used for sensing.

In a possible implementation, the first configuration information is carried in physical layer signaling and/or higher layer signaling. The physical layer signaling may be physical layer control information, the physical layer control information may include downlink control information (downlink control information, DCI) or receiving control information (receiving control information, RxCI), and the higher layer signaling may include RRC signaling or media access control (media access control, MAC) control element (control element, CE) signaling.

In a possible implementation, there are one or more second communication apparatuses, and/or there are one or more third communication apparatuses. In this way, reference signals sent by one device may be received by a plurality of devices, so that reference signal overheads are reduced. In addition, reference signals sent by a plurality of devices may be received by one device, so that channel measurement is achieved on different communication links, and the communication links are flexibly switched, thereby improving performance.

According to a second aspect, a channel measurement method is provided. The method may be applied to a second communication apparatus. The second communication apparatus is, for example, a terminal device or a network device. The terminal device is, for example, a smart factory device, a mobile phone, a car, or an internet of things (internet of things, IoT) device. The channel measurement method includes the following steps: The second communication apparatus receives first configuration information from a first communication apparatus. The first configuration information is used to indicate the second communication apparatus to send a reference signal and indicate the third communication apparatus to receive the reference signal, the reference signal is used for channel measurement, the first configuration information includes information about a communication group, the information about the communication group is used to determine the second communication apparatus and the third communication apparatus, and the communication group includes the second communication apparatus and the third communication apparatus. The second communication apparatus sends the reference signal based on the first configuration information.

Types of the second communication apparatus and the third communication apparatus may be any one of devices such as a base station, a terminal device, a satellite, an IAB node, a relay node, and CPE.

In a possible implementation, the channel measurement method according to the second aspect further includes the following step: The second communication apparatus receives second configuration information from the first communication apparatus, where the second configuration information is used to configure link information. The link information includes at least one of a link number, link type information, a link sending device identifier, and a link receiving device identifier.

In a possible implementation, the information about the communication group includes one or more of the following: a first identifier, a second identifier, link type information, and a link number. The first identifier corresponds to the second communication apparatus, and the second identifier corresponds to the third communication apparatus.

Optionally, the first identifier is any one of a device-level identifier, a device group-level identifier, or a broadcast-level identifier. The second identifier is any one of a device-level identifier, a device group-level identifier, or a broadcast-level identifier.

In a possible implementation, the information about the communication group includes a reference signal resource identifier, and a correspondence exists between the reference signal resource identifier and the communication group.

In a possible implementation, the first configuration information is device-level configuration information or device group-level configuration information.

Optionally, the first configuration information is the device-level configuration information, and the first configuration information includes a sending reference signal resource list and a receiving reference signal resource list. The sending reference signal resource list is used to indicate to send the reference signal, and the receiving reference signal resource list is used to indicate to receive the reference signal.

Optionally, the first configuration information is the device group-level configuration information, and the first configuration information is used to indicate at least one second communication apparatus in one group of devices to send the reference signal and indicate at least one third communication apparatus in the group of devices to receive the reference signal.

Further, the first configuration information is group RRC signaling, and the group RRC signaling is carried on a group physical shared channel scheduled by using control information scrambled by using a group identifier; or the first configuration information is group physical layer control information, and the group physical layer control information is scrambled by using a group identifier. The group identifier may be a G-RNTI.

In a possible implementation, the first configuration information further indicates a reference signal resource location.

In a possible implementation, the first configuration information further includes beam pair information, and the beam pair information indicates a transmit beam corresponding to the reference signal and/or a receive beam corresponding to the reference signal.

In a possible implementation, the first configuration information further includes a reference signal resource identifier, and the reference signal resource identifier is an identifier obtained through joint numbering of resources between communication groups. That the reference signal resource identifier is an identifier obtained through joint numbering of resources between communication groups may be understood as that reference signal resource identifiers of a plurality of different sending devices corresponding to one receiving device are different.

In a possible implementation, the first configuration information further includes a reference signal resource identifier, and the reference signal resource identifier is an identifier obtained through independent numbering of resources between communication groups.

In a possible implementation, the reference signal includes a CSI-RS and/or an SRS. Optionally, the reference signal may be another reference signal, for example, a reference signal used for sensing.

In a possible implementation, the configuration information is carried in physical layer signaling and/or higher layer signaling. The physical layer signaling may be physical layer control information, the physical layer control information may include DCI or RxCI, and the higher layer signaling may include RRC signaling or MAC CE signaling.

In a possible implementation, there are one or more second communication apparatuses, and/or there are one or more third communication apparatuses.

In addition, for technical effects of the channel measurement method in the second aspect, refer to the technical effects of the channel measurement method in the first aspect. Details are not described herein again.

According to a third aspect, a channel measurement method is provided. The method may be applied to a third communication apparatus, and the third communication apparatus is, for example, a terminal device or a network device. The channel measurement method includes the following steps: The third communication apparatus receives first configuration information from a first communication apparatus. The first configuration information is used to indicate the second communication apparatus to send a reference signal and indicate the third communication apparatus to receive the reference signal, the reference signal is used for channel measurement, the first configuration information includes information about a communication group, the information about the communication group is used to determine the second communication apparatus and the third communication apparatus, and the communication group includes the second communication apparatus and the third communication apparatus. The third communication apparatus receives the reference signal based on the first configuration information.

Types of the second communication apparatus and the third communication apparatus may be any one of devices such as a base station, a terminal device, a satellite, an IAB node, a relay node, and CPE.

In a possible implementation, the channel measurement method according to the third aspect further includes the following step: The third communication apparatus receives second configuration information from the first communication apparatus, where the second configuration information is used to configure link information. The link information includes at least one of a link number, link type information, a link sending device identifier, and a link receiving device identifier.

In a possible implementation, the information about the communication group includes one or more of the following: a first identifier, a second identifier, link type information, and a link number. The first identifier corresponds to the second communication apparatus, and the second identifier corresponds to the third communication apparatus.

Optionally, the first identifier is any one of a device-level identifier, a device group-level identifier, or a broadcast-level identifier. The second identifier is any one of a device-level identifier, a device group-level identifier, or a broadcast-level identifier.

In a possible implementation, the information about the communication group includes a reference signal resource identifier, and a correspondence exists between the reference signal resource identifier and the communication group.

In a possible implementation, the first configuration information is device-level configuration information or device group-level configuration information.

Optionally, the first configuration information is the device-level configuration information, and the first configuration information includes a sending reference signal resource list and a receiving reference signal resource list. The sending reference signal resource list is used to indicate to send the reference signal, and the receiving reference signal resource list is used to indicate to receive the reference signal.

Optionally, the first configuration information is the device group-level configuration information, and the first configuration information is used to indicate at least one second communication apparatus in one group of devices to send the reference signal and indicate at least one third communication apparatus in the group of devices to receive the reference signal.

Further, the first configuration information is group RRC signaling, and the group RRC signaling is carried on a group physical shared channel scheduled by using control information scrambled by using a group identifier; or the first configuration information is group physical layer control information, and the group physical layer control information is scrambled by using a group identifier. The group identifier may be a G-RNTI.

In a possible implementation, the first configuration information further indicates a reference signal resource location.

In a possible implementation, the first configuration information further includes beam pair information, and the beam pair information indicates a transmit beam corresponding to the reference signal and/or a receive beam corresponding to the reference signal.

In a possible implementation, the first configuration information further includes a reference signal resource identifier, and the reference signal resource identifier is an identifier obtained through joint numbering of resources between communication groups. That the reference signal resource identifier is an identifier obtained through joint numbering of resources between communication groups may be understood as that reference signal resource identifiers of a plurality of different sending devices corresponding to one receiving device are different.

In a possible implementation, the first configuration information further includes a reference signal resource identifier, and the reference signal resource identifier is an identifier obtained through independent numbering of resources between communication groups.

In a possible implementation, the channel measurement method according to the third aspect further includes the following step: The third communication apparatus determines CSI based on the reference signal.

In a possible implementation, the channel measurement method according to the third aspect further includes the following step: The third communication apparatus sends the CSI to the first communication apparatus.

Optionally, the CSI sent by the third communication apparatus is CSI with optimal performance in a plurality of reference signals measured by the third communication apparatus.

Optionally, the CSI sent by the third communication apparatus includes information about a communication group and a reference signal resource identifier, and/or a reference signal resource identifier.

In a possible implementation, the reference signal includes a CSI-RS and/or an SRS. Optionally, the reference signal may be another reference signal, for example, a reference signal used for sensing.

In a possible implementation, the configuration information is carried in physical layer signaling and/or higher layer signaling. The physical layer signaling may be physical layer control information, the physical layer control information may include DCI or RxCI, and the higher layer signaling may include RRC signaling or MAC CE signaling.

In a possible implementation, there are one or more second communication apparatuses, and/or there are one or more third communication apparatuses.

In addition, for technical effects of the channel measurement method in the third aspect, refer to the technical effects of the channel measurement method in the first aspect. Details are not described herein again.

According to a fourth aspect, a first communication apparatus is provided. The first communication apparatus includes a processing module and a transceiver module. The processing module is configured to determine first configuration information. The first configuration information is used to indicate the second communication apparatus to send a reference signal and indicate the third communication apparatus to receive the reference signal, the reference signal is used for channel measurement, the first configuration information includes information about a communication group, the information about the communication group is used to determine the second communication apparatus and the third communication apparatus, and the communication group includes the second communication apparatus and the third communication apparatus. The transceiver module is configured to send the first configuration information.

The processing module may be further configured to change the information about the communication group, to change the second communication apparatus and the third communication apparatus that are determined by using the information about the communication group.

Types of the second communication apparatus and the third communication apparatus may be any one of devices such as a base station, a terminal device, a satellite, an IAB node, a relay node, and CPE.

In a possible implementation, the transceiver module is further configured to send second configuration information, where the second configuration information is used to configure link information. The link information includes at least one of a link number, link type information, a link sending device identifier, and a link receiving device identifier.

In a possible implementation, the information about the communication group includes one or more of the following: a first identifier, a second identifier, link type information, and a link number. The first identifier corresponds to the second communication apparatus, and the second identifier corresponds to the third communication apparatus.

Optionally, the first identifier is any one of a device-level identifier, a device group-level identifier, or a broadcast-level identifier. The second identifier is any one of a device-level identifier, a device group-level identifier, or a broadcast-level identifier.

In a possible implementation, the information about the communication group includes a reference signal resource identifier, and a correspondence exists between the reference signal resource identifier and the communication group.

In a possible implementation, the first configuration information is device-level configuration information or device group-level configuration information.

Optionally, the first configuration information is the device-level configuration information, and the first configuration information includes a sending reference signal resource list and a receiving reference signal resource list. The sending reference signal resource list is used to indicate to send the reference signal, and the receiving reference signal resource list is used to indicate to receive the reference signal.

Optionally, the first configuration information is the device group-level configuration information, and the first configuration information is used to indicate at least one second communication apparatus in one group of devices to send the reference signal and indicate at least one third communication apparatus in the group of devices to receive the reference signal.

Further, the first configuration information is group RRC signaling, and the group RRC signaling is carried on a group physical shared channel scheduled by using control information scrambled by using a group identifier; or the first configuration information is group physical layer control information, and the group physical layer control information is scrambled by using a group identifier. The group identifier may be a G-RNTI.

In a possible implementation, the first configuration information further indicates a reference signal resource location.

In a possible implementation, the first configuration information further includes beam pair information, and the beam pair information indicates a transmit beam corresponding to the reference signal and/or a receive beam corresponding to the reference signal.

In a possible implementation, the first configuration information further includes a reference signal resource identifier, and the reference signal resource identifier is an identifier obtained through joint numbering of resources between communication groups.

In a possible implementation, the first configuration information further includes a reference signal resource identifier, and the reference signal resource identifier is an identifier obtained through independent numbering of resources between communication groups.

In a possible implementation, the transceiver module is further configured to receive CSI sent by the third communication apparatus.

Optionally, the CSI sent by the third communication apparatus is CSI with optimal performance in a plurality of reference signals measured by the third communication apparatus.

Optionally, the CSI sent by the third communication apparatus includes information about a communication group and/or a reference signal resource identifier.

In a possible implementation, the reference signal includes a CSI-RS and/or an SRS. Optionally, the reference signal may be another reference signal, for example, a reference signal used for sensing.

In a possible implementation, the first configuration information is carried in physical layer signaling and/or higher layer signaling. The physical layer signaling may be physical layer control information, the physical layer control information may include DCI or RxCI, and the higher layer signaling may include RRC signaling or MAC CE signaling.

In a possible implementation, there are one or more second communication apparatuses, and/or there are one or more third communication apparatuses.

Optionally, the transceiver module may include a receiving module and a sending module. The receiving module is configured to implement the receiving function of the first communication apparatus according to the fourth aspect, and the sending module is configured to implement the sending function of the first communication apparatus according to the fourth aspect.

Optionally, the first communication apparatus according to the fourth aspect may further include a storage module, and the storage module stores a program or instructions. When the processing module executes the program or the instructions, the first communication apparatus is enabled to perform the channel measurement method according to the first aspect.

It should be noted that the first communication apparatus in the fourth aspect may be a network device, may be a chip (system) or another part or component disposed in the network device, or may be a first communication apparatus including the network device. This is not limited in the application.

In addition, for technical effects of the first communication apparatus in the fourth aspect, refer to the technical effects of the channel measurement method in the first aspect. Details are not described herein again.

According to a fifth aspect, a second communication apparatus is provided. The second communication apparatus includes a processing module and a transceiver module. The transceiver module is configured to receive first configuration information from a first communication apparatus. The first configuration information is used to indicate the second communication apparatus to send a reference signal and indicate the third communication apparatus to receive the reference signal, the reference signal is used for channel measurement, the first configuration information includes information about a communication group, the information about the communication group is used to determine the second communication apparatus and the third communication apparatus, and the communication group includes the second communication apparatus and the third communication apparatus. The processing module is configured to control, based on the first configuration information, the transceiver module to send the reference signal.

Types of the second communication apparatus and the third communication apparatus may be any one of devices such as a base station, a terminal device, a satellite, an IAB node, a relay node, and CPE.

In a possible implementation, the transceiver module is further configured to receive second configuration information from the first communication apparatus, where the second configuration information is used to configure link information. The link information includes at least one of a link number, link type information, a link sending device identifier, and a link receiving device identifier.

In a possible implementation, the information about the communication group includes one or more of the following: a first identifier, a second identifier, link type information, and a link number. The first identifier corresponds to the second communication apparatus, and the second identifier corresponds to the third communication apparatus.

Optionally, the first identifier is any one of a device-level identifier, a device group-level identifier, or a broadcast-level identifier. The second identifier is any one of a device-level identifier, a device group-level identifier, or a broadcast-level identifier.

In a possible implementation, the information about the communication group includes a reference signal resource identifier, and a correspondence exists between the reference signal resource identifier and the communication group.

In a possible implementation, the first configuration information is device-level configuration information or device group-level configuration information.

Optionally, the first configuration information is the device-level configuration information, and the first configuration information includes a sending reference signal resource list and a receiving reference signal resource list. The sending reference signal resource list is used to indicate to send the reference signal, and the receiving reference signal resource list is used to indicate to receive the reference signal.

Optionally, the first configuration information is the device group-level configuration information, and the first configuration information is used to indicate at least one second communication apparatus in one group of devices to send the reference signal and indicate at least one third communication apparatus in the group of devices to receive the reference signal.

Further, the first configuration information is group RRC signaling, and the group RRC signaling is carried on a group physical shared channel scheduled by using control information scrambled by using a group identifier; or the first configuration information is group physical layer control information, and the group physical layer control information is scrambled by using a group identifier. The group identifier may be a G-RNTI.

In a possible implementation, the first configuration information further indicates a reference signal resource location.

In a possible implementation, the first configuration information further includes beam pair information, and the beam pair information indicates a transmit beam corresponding to the reference signal and/or a receive beam corresponding to the reference signal.

In a possible implementation, the first configuration information further includes a reference signal resource identifier, and the reference signal resource identifier is an identifier obtained through joint numbering of resources between communication groups.

In a possible implementation, the first configuration information further includes a reference signal resource identifier, and the reference signal resource identifier is an identifier obtained through independent numbering of resources between communication groups.

In a possible implementation, the reference signal includes a CSI-RS and/or an SRS. Optionally, the reference signal may be another reference signal, for example, a reference signal used for sensing.

In a possible implementation, the first configuration information is carried in physical layer signaling and/or higher layer signaling. The physical layer signaling may be physical layer control information, the physical layer control information may include DCI or RxCI, and the higher layer signaling may include RRC signaling or MAC CE signaling.

In a possible implementation, there are one or more second communication apparatuses, and/or there are one or more third communication apparatuses.

Optionally, the transceiver module may include a receiving module and a sending module. The receiving module is configured to implement the receiving function of the second communication apparatus according to the fifth aspect, and the sending module is configured to implement the sending function of the second communication apparatus according to the fifth aspect.

Optionally, the second communication apparatus according to the fifth aspect may further include a storage module, and the storage module stores a program or instructions. When the processing module executes the program or the instructions, the second communication apparatus is enabled to perform the channel measurement method according to the second aspect.

It should be noted that the second communication apparatus in the fifth aspect may be a terminal device, a network device, or the like, and the second communication apparatus may be denoted as a first device. The second communication apparatus in the fifth aspect may be a chip (system) or another part or component disposed in a device such as the terminal device or the network device, or may be a second communication apparatus including a device such as the terminal device or the network device. This is not limited in the application.

In addition, for technical effects of the second communication apparatus according to the fifth aspect, refer to the technical effects of the channel measurement method according to the second aspect. Details are not described herein again.

According to a sixth aspect, a third communication apparatus is provided. The third communication apparatus includes a processing module and a transceiver module. The transceiver module is configured to receive first configuration information from a first communication apparatus. The first configuration information is used to indicate the second communication apparatus to send a reference signal and indicate the third communication apparatus to receive the reference signal, the reference signal is used for channel measurement, the first configuration information includes information about a communication group, the information about the communication group is used to determine the second communication apparatus and the third communication apparatus, and the communication group includes the second communication apparatus and the third communication apparatus. The processing module is configured to control, based on the first configuration information, the transceiver module to receive the reference signal.

Types of the second communication apparatus and the third communication apparatus may be any one of devices such as a base station, a terminal device, a satellite, an IAB node, a relay node, and CPE.

In a possible implementation, the transceiver module is further configured to receive second configuration information from the first communication apparatus, where the second configuration information is used to configure link information. The link information includes at least one of a link number, link type information, a link sending device identifier, and a link receiving device identifier.

In a possible implementation, the information about the communication group includes one or more of the following: a first identifier, a second identifier, link type information, and a link number. The first identifier corresponds to the second communication apparatus, and the second identifier corresponds to the third communication apparatus.

Optionally, the first identifier is any one of a device-level identifier, a device group-level identifier, or a broadcast-level identifier. The second identifier is any one of a device-level identifier, a device group-level identifier, or a broadcast-level identifier.

In a possible implementation, the information about the communication group includes a reference signal resource identifier, and a correspondence exists between the reference signal resource identifier and the communication group.

In a possible implementation, the first configuration information is device-level configuration information or device group-level configuration information.

Optionally, the first configuration information is the device-level configuration information, and the first configuration information includes a sending reference signal resource list and a receiving reference signal resource list. The sending reference signal resource list is used to indicate to send the reference signal, and the receiving reference signal resource list is used to indicate to receive the reference signal.

Optionally, the first configuration information is the device group-level configuration information, and the first configuration information is used to indicate at least one second communication apparatus in one group of devices to send the reference signal and indicate at least one third communication apparatus in the group of devices to receive the reference signal.

Further, the first configuration information is group RRC signaling, and the group RRC signaling is carried on a group physical shared channel scheduled by using control information scrambled by using a group identifier; or the first configuration information is group physical layer control information, and the group physical layer control information is scrambled by using a group identifier. The group identifier may be a G-RNTI.

In a possible implementation, the first configuration information further indicates a reference signal resource location.

In a possible implementation, the first configuration information further includes beam pair information, and the beam pair information indicates a transmit beam corresponding to the reference signal and/or a receive beam corresponding to the reference signal.

In a possible implementation, the first configuration information further includes a reference signal resource identifier, and the reference signal resource identifier is an identifier obtained through joint numbering of resources between communication groups.

In a possible implementation, the first configuration information further includes a reference signal resource identifier, and the reference signal resource identifier is an identifier obtained through independent numbering of resources between communication groups.

In a possible implementation, the processing module is further configured to determine CSI based on the reference signal.

In a possible implementation, the transceiver module is further configured to send the CSI to the first communication apparatus.

Optionally, the CSI sent by the third communication apparatus is CSI with optimal performance in a plurality of reference signals measured by the third communication apparatus.

Optionally, the CSI sent by the third communication apparatus includes information about a communication group and/or a reference signal resource identifier.

In a possible implementation, the reference signal includes a CSI-RS and/or an SRS. Optionally, the reference signal may be another reference signal, for example, a reference signal used for sensing.

In a possible implementation, the first configuration information is carried in physical layer signaling and/or higher layer signaling. The physical layer signaling may be physical layer control information, the physical layer control information may include DCI or RxCI, and the higher layer signaling may include RRC signaling or MAC CE signaling.

In a possible implementation, there are one or more second communication apparatuses, and/or there are one or more third communication apparatuses.

Optionally, the transceiver module may include a receiving module and a sending module. The receiving module is configured to implement the receiving function of the third communication apparatus according to the sixth aspect, and the sending module is configured to implement the sending function of the third communication apparatus according to the sixth aspect.

Optionally, the third communication apparatus according to the sixth aspect may further include a storage module, and the storage module stores a program or instructions. When the processing module executes the program or the instructions, the third communication apparatus is enabled to perform the channel measurement method according to the third aspect.

It should be noted that the third communication apparatus in the sixth aspect may be a terminal device, a network device, or the like, and the second communication apparatus may be denoted as a second device. The third communication apparatus in the sixth aspect may be a chip (system) or another part or component disposed in a device such as the terminal device or the network device, or may be a third communication apparatus including a device such as the terminal device or the network device. This is not limited in the application.

In addition, for technical effects of the third communication apparatus according to the sixth aspect, refer to the technical effects of the channel measurement method according to the third aspect. Details are not described herein again.

According to a seventh aspect, a communication apparatus is provided. The communication apparatus is configured to perform the channel measurement method according to any one of the implementations of the first aspect to the third aspect.

In the application, the communication apparatus in the seventh aspect may be the first communication apparatus, the second communication apparatus, or the third communication apparatus, may be a chip (system) or another part or component disposed in the first communication apparatus, the second communication apparatus, or the third communication apparatus, or may be an apparatus including the first communication apparatus, the second communication apparatus, or the third communication apparatus. This is not limited in the application. The first communication apparatus is configured to perform the channel measurement method according to any one of the possible implementations of the first aspect, the second communication apparatus is configured to perform the channel measurement method according to any one of the possible implementations of the second aspect, and the third communication apparatus is configured to perform the channel measurement method according to any one of the possible implementations of the third aspect.

It should be understood that the communication apparatus according to the seventh aspect includes a corresponding module, unit, or means (means) for implementing the channel measurement method according to any one of the first aspect to the third aspect. The module, unit, or means may be implemented by hardware, may be implemented by software, or may be implemented by hardware executing corresponding software. The hardware or software includes one or more modules or units configured to perform functions related to the foregoing channel measurement method.

According to an eighth aspect, a communication apparatus is provided. The communication apparatus includes a processor, and the processor is configured to perform the channel measurement method according to any one of the possible implementations of the first aspect to the third aspect.

In a possible implementation, the communication apparatus according to the eighth aspect may further include a transceiver. The transceiver may be a transceiver circuit or an interface circuit. The transceiver may be used by the communication apparatus according to the eighth aspect to communicate with another communication apparatus.

In a possible implementation, the communication apparatus according to the eighth aspect may further include a memory. The memory and the processor may be integrated together, or may be disposed separately. The memory may be configured to store a computer program and/or data in the channel measurement method according to any one of the first aspect to the third aspect.

In the application, the communication apparatus in the eighth aspect may be the first communication apparatus, the second communication apparatus, or the third communication apparatus, may be a chip (system) or another part or component disposed in the first communication apparatus, the second communication apparatus, or the third communication apparatus, or may be an apparatus including the first communication apparatus, the second communication apparatus, or the third communication apparatus. This is not limited in the application. The first communication apparatus is configured to perform the channel measurement method according to any one of the possible implementations of the first aspect, the second communication apparatus is configured to perform the channel measurement method according to any one of the possible implementations of the second aspect, and the third communication apparatus is configured to perform the channel measurement method according to any one of the possible implementations of the third aspect.

According to a ninth aspect, a communication apparatus is provided. The communication apparatus includes a processor. The processor is coupled to a memory, and the processor is configured to execute a computer program stored in the memory, to enable the communication apparatus to perform the channel measurement method according to any one of the possible implementations of the first aspect to the third aspect.

In a possible implementation, the communication apparatus according to the ninth aspect may further include a transceiver. The transceiver may be a transceiver circuit or an interface circuit. The transceiver may be used by the communication apparatus according to the ninth aspect to communicate with another communication apparatus.

In the application, the communication apparatus in the ninth aspect may be the first communication apparatus, the second communication apparatus, or the third communication apparatus, may be a chip (system) or another part or component disposed in the first communication apparatus, the second communication apparatus, or the third communication apparatus, or may be an apparatus including the first communication apparatus, the second communication apparatus, or the third communication apparatus. This is not limited in the application. The first communication apparatus is configured to perform the channel measurement method according to any one of the possible implementations of the first aspect, the second communication apparatus is configured to perform the channel measurement method according to any one of the possible implementations of the second aspect, and the third communication apparatus is configured to perform the channel measurement method according to any one of the possible implementations of the third aspect.

According to a tenth aspect, a communication apparatus is provided. The communication apparatus includes a processor and an interface circuit. The interface circuit is configured to receive code instructions and transmit the code instructions to the processor. The processor is configured to run the code instructions to perform the channel measurement method according to any one of the implementations of the first aspect to the third aspect.

In a possible implementation, the communication apparatus according to the tenth aspect may further include a memory. The memory and the processor may be integrated together, or may be disposed separately. The memory may be configured to store a computer program and/or data in the channel measurement method according to any one of the first aspect to the third aspect.

In the application, the communication apparatus in the tenth aspect may be the first communication apparatus, the second communication apparatus, or the third communication apparatus, may be a chip (system) or another part or component disposed in the first communication apparatus, the second communication apparatus, or the third communication apparatus, or may be an apparatus including the first communication apparatus, the second communication apparatus, or the third communication apparatus. This is not limited in the application. The first communication apparatus is configured to perform the channel measurement method according to any one of the possible implementations of the first aspect, the second communication apparatus is configured to perform the channel measurement method according to any one of the possible implementations of the second aspect, and the third communication apparatus is configured to perform the channel measurement method according to any one of the possible implementations of the third aspect.

According to an eleventh aspect, a communication apparatus is provided. The communication apparatus includes a processor and a storage medium. The storage medium stores instructions. When the instructions are run by the processor, the channel measurement method according to any one of the possible implementations of the first aspect to the third aspect is enabled to be implemented.

In the application, the communication apparatus in the eleventh aspect may be the first communication apparatus, the second communication apparatus, or the third communication apparatus, may be a chip (system) or another part or component disposed in the first communication apparatus, the second communication apparatus, or the third communication apparatus, or may be an apparatus including the first communication apparatus, the second communication apparatus, or the third communication apparatus. This is not limited in the application. The first communication apparatus is configured to perform the channel measurement method according to any one of the possible implementations of the first aspect, the second communication apparatus is configured to perform the channel measurement method according to any one of the possible implementations of the second aspect, and the third communication apparatus is configured to perform the channel measurement method according to any one of the possible implementations of the third aspect.

According to a twelfth aspect, a processor is provided. The processor is configured to perform the channel measurement method according to any one of the possible implementations of the first aspect to the third aspect.

According to a thirteenth aspect, a communication system is provided. The communication system includes the first communication apparatus, the second communication apparatus, or the third communication apparatus. The first communication apparatus may include an access network device and a core network device. The first communication apparatus is configured to perform the channel measurement method according to any one of the possible implementations of the first aspect, the second communication apparatus is configured to perform the channel measurement method according to any one of the possible implementations of the second aspect, and the third communication apparatus is configured to perform the channel measurement method according to any one of the possible implementations of the third aspect.

According to a fourteenth aspect, a computer-readable storage medium is provided. The computer-readable storage medium includes a computer program or instructions. When the computer program or the instructions are run by a processor, the channel measurement method according to any one of the possible implementations of the first aspect to the third aspect is enabled to be implemented.

According to a fifteenth aspect, a computer program product is provided. The computer program product includes instructions. When the instructions are run by a processor, the channel measurement method according to any one of the possible implementations of the first aspect to the third aspect is enabled to be implemented.

According to a sixteenth aspect, a chip is provided. The chip includes a processing logic circuit and an interface circuit. There may be one or more processing logic circuits, and there may be a plurality of interface circuits.

The interface circuit is configured to receive code instructions and transmit the code instructions to the processing logic circuit. The processing logic circuit is configured to run the code instructions to perform the channel measurement method according to any one of the implementations of the first aspect to the third aspect.

Optionally, the chip may include a memory. The memory and the processing logic circuit may be integrated together, or may be disposed separately. The memory may be configured to store a computer program and/or data in the channel measurement method according to any one of the first aspect to the third aspect.

In the application, the chip according to the sixteenth aspect may be located in the first communication apparatus, the second communication apparatus, or the third communication apparatus, or may be located in a first communication apparatus, a second communication apparatus, or a third communication apparatus in a communication system. When located in the first communication apparatus, the chip is configured to perform the channel measurement method according to any one of the possible implementations of the first aspect. When located in the second communication apparatus, the chip is configured to perform the channel measurement method according to any one of the possible implementations of the second aspect. When located in the third communication apparatus, the chip is configured to perform the channel measurement method according to any one of the possible implementations of the third aspect.

For technical effects brought by any one of the implementations of the seventh aspect to the sixteenth aspect, refer to the technical effects brought by any one of corresponding implementations of the first aspect to the third aspect. Details are not described herein again.

In the application, based on the implementations according to the foregoing aspects, the implementations may be further combined to provide more implementations.

### BRIEF DESCRIPTION OF DRAWINGS

FIG. 1 is a schematic diagram of deployment of a double-layer structure;
FIG. 2 is a schematic diagram of Uu communication;
FIG. 3 is a schematic diagram of sidelink communication;
FIG. 4 is a schematic diagram of a sidelink slot;
FIG. 5 is a schematic diagram of an integrated access and backhaul architecture according to an embodiment of the application;
FIG. 6 is a schematic diagram of an architecture of a communication system according to an embodiment of the application;
FIG. 7 is a schematic diagram of another architecture of a communication system according to an embodiment of the application;
FIG. 8 is a schematic diagram of another architecture of a communication system according to an embodiment of the application;
FIG. 9 is a schematic diagram of another architecture of a communication system according to an embodiment of the application;
FIG. 10 is a schematic diagram of a system architecture of a satellite according to an embodiment of the application;
FIG. 11 is a schematic diagram of another architecture of a communication system according to an embodiment of the application;
FIG. 12 is a schematic diagram of a structure of a communication apparatus according to an embodiment of the application;
FIG. 13 is a schematic diagram 1 of interaction in a channel measurement method according to an embodiment of the application;
FIG. 14 is a schematic diagram of a sidelink communication scenario according to an embodiment of the application;
FIG. 15 is a schematic diagram of another sidelink communication scenario according to an embodiment of the application;
FIG. 16 is a schematic diagram 2 of interaction in a channel measurement method according to an embodiment of the application;
FIG. 17 is a schematic diagram 3 of interaction in a channel measurement method according to an embodiment of the application;
FIG. 18 is a schematic diagram 4 of interaction in a channel measurement method according to an embodiment of the application;
FIG. 19 is a schematic diagram 5 of interaction in a channel measurement method according to an embodiment of the application;
FIG. 20 is a schematic diagram 6 of interaction in a channel measurement method according to an embodiment of the application; and
FIG. 21 is a schematic diagram of a structure of a communication apparatus according to an embodiment of the application.

### DESCRIPTION OF EMBODIMENTS

For ease of understanding of solutions in embodiments of the application, brief descriptions of related technologies are first provided.

### 1. Industrial manufacturing scenario

Manufacturing devices in smart factories are connected to an enterprise cloud or an onsite control system through 5G to collect onsite environment data and production data, analyze a production status in real time, and implement an entire unmanned and wireless production line. Intelligent industrial manufacturing has a quite high requirement on technical performance, and high-end manufacturing has a quite high requirement on latency and stability of workshop equipment. Specifically, the smart factory industry proposes a specific performance requirement. For example, in a service area, there are no more than 50 users, and in end-to-end latency of 1 ms, communication service availability (communication system available, CSA) of a data packet with a size of 40 bytes needs to be between 99.9999% and 99.999999%. The CSA is defined as follows: If a packet received by a receive end is damaged or is not received in time (exceeding allowed maximum end-to-end latency), the service is considered unavailable.

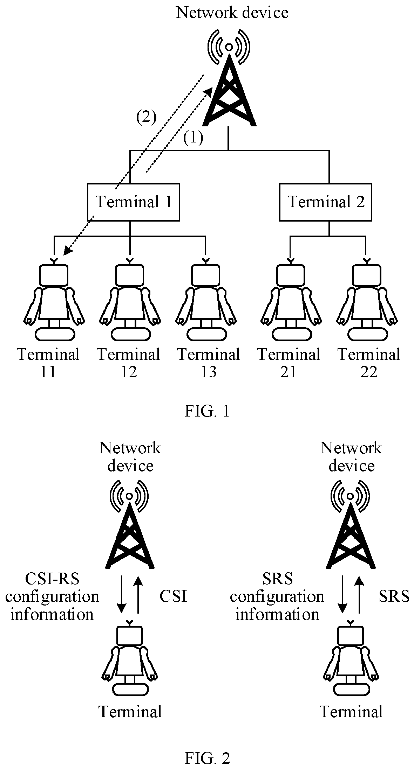

In an actual industrial scenario, a two-layer structure is usually used for deployment. The two-layer structure includes, for example, a base station, a controller, and a bottom-end device (for example, a sensor or an actuator). FIG. 1 is a schematic diagram of deployment of a two-layer structure. As shown in FIG. 1, a network device is separately connected to a terminal 1 and a terminal 2, the terminal 1 is separately connected to a terminal 11, a terminal 12, and a terminal 13, and the terminal 2 is separately connected to a terminal 21 and a terminal 22. The terminal 1 and the terminal 2 are controllers (controllers or masters), and the terminal 11 to the terminal 13 and the terminal 21 to the terminal 22 are bottom-end devices. To realize communication between the controller and the bottom-end device, an example of the network device, the terminal 1, and the terminal 11 is used, the terminal 1 needs to communicate with the network device (for example, (1) in FIG. 1), and then the network device needs to communicate with the terminal 11 (for example, (2) in FIG. 1). Consequently, communication latency between the controller and the bottom-end device is large.

Therefore, a communication method for reducing communication latency between a controller and a bottom-end device needs to be designed. Currently, communication latency between a controller and a bottom-end device is usually reduced through Uu communication and sidelink (sidelink, SL) communication (refer to the following term explanations of Uu communication and sidelink communication), to meet a requirement of URLLC for low latency and high reliability.

### 2. Uu communication

A network device and a terminal device may communicate with each other through a Uu interface. Specifically, FIG. 2 is a schematic diagram of Uu communication. As shown in FIG. 2, when obtaining CSI between a network device and a terminal, the network device may send CSI-RS configuration information and a CSI-RS to the terminal, where the CSI-RS configuration information is used to indicate the terminal to receive the CSI-RS and perform channel measurement and CSI feedback based on the CSI-RS; or the network device may send SRS configuration information to the terminal, where the SRS configuration information is used to indicate the terminal to send an SRS, and the network device performs channel measurement based on the SRS.

### 3. Sidelink communication

Devices may communicate with each other by using a sidelink communication technology. Specifically, FIG. 3 is a schematic diagram of sidelink communication. As shown in FIG. 3, when a network device obtains CSI between two terminals (a terminal 1 and a terminal 11), the following steps may be included.

Step 1.1 (refer to (1) in FIG. 3): The network device sends resource pool information to the terminal 1, where the resource pool information indicates a time-frequency resource scheduled to the terminal 1.

Specifically, the network device sends DCI 3_0 to the terminal 1, where the DCI 3_0 is used to schedule a physical sidelink control channel (physical sidelink control channel, PSCCH) and a physical sidelink shared channel (physical sidelink shared channel, PSSCH) of new radio (new radio, NR). An information field of an SCI format 1-A in the DCI 3_0 indicates a time-frequency resource scheduled to the terminal 1.

Step 12 (refer to (2) in FIG. 3): The terminal 1 sends SCI and sidelink data to the terminal 11 based on the resource pool information sent by the network device, where the SCI is used to indicate the terminal 11 to perform CSI-RS measurement and feed back CSI. A CSI-RS is sent with the sidelink data.

Specifically, the SCI sent by the terminal 1 to the terminal 11 is used to schedule the PSSCH. The SCI includes 1^{st}-stage SCI (1^{st}-stage SCI) and 2^{nd}-stage SCI (2^{nd}-stage SCI), and the 2^{nd}-stage SCI includes an SCI format 2-A and an SCI format 2-B. A CSI request (request) included in an information field of the SCI format 2-A is used to indicate the terminal 11 to perform CSI-RS measurement and feed back CSI.

Correspondingly, the terminal 11 receives and parses the SCI sent by the terminal 1.

Step 1.3 (refer to (3) in FIG. 3): The terminal 11 performs channel measurement based on an indication of the SCI, to obtain the CSI, and sends the CSI and HARQ-ACK information to the terminal 1.

Correspondingly, the terminal 1 receives the CSI and the hybrid automatic repeat request acknowledgment (Hybrid Automatic Repeat request Acknowledgment, HARQ-ACK) information that are sent by the terminal 11. The terminal 11 sends the CSI by using a MAC CE. The HARQ-ACK information is carried on a physical sidelink feedback channel (physical sidelink feedback channel, PSFCH).

Step 1.4 (refer to (4) in FIG. 3): The terminal 1 sends the CSI to the network device. Correspondingly, the network device receives the CSI sent by the terminal 1.

### 4. Sidelink slot (SL slot)

A base station may indicate a sidelink slot in sidelink transmission. FIG. 4 is a schematic diagram of a sidelink slot. As shown in FIG. 4, in a communication process, a downlink slot, an uplink slot, and a sidelink slot are semi-statically configured in a time division manner. Consequently, resource utilization is not flexible enough.

### 5. Backhaul link (backhaul link) and access link (access link) in IAB

FIG. 5 is a schematic diagram of an IAB architecture according to an embodiment of the application. As shown in FIG. 5, IAB may include an IAB parent node (IAB Doner), an IAB node (IAB node), and user equipment. A link between the IAB donor and the IAB node is a backhaul link, and a link between the user equipment and the IAB node is an access link. The backhaul link and the access link use a time division multiplexing manner, for example, a backhaul slot or an access slot is configured in a semi-static manner. Consequently, inflexible resource utilization is also caused.

Currently, when channel measurement is performed and channel state information (channel state information, CSI) is fed back during communication between terminal devices, there are problems of large communication latency and poor communication performance, and requirements of a communication system (for example, a sixth generation (6th generation, 6G) communication system) for low latency and low energy consumption cannot be met. In addition, currently, each cell in a factory has hundreds of users, and CSI-RS resource overheads are relatively large. However, a current manner of semi-static resource configuration based on a base station causes inflexible resource utilization, and further has a problem that a requirement of a scenario in which a factory has a large quantity of connected users cannot be supported.

Specifically, a plurality of companies of the 3rd generation partnership project (3rd Generation Partnership Project, 3GPP) use a current NR/5G technology to simulate and model a smart factory use case. Simulation results of most companies show that required CSA can be achieved with a maximum of 20 users. In other words, the current technology cannot meet a URLLC requirement in a smart factory. Consequently, a corresponding use case/service workshop/area in smart work cannot be automated and wireless.

Therefore, in a design of a communication system, a technical solution needs to be designed to reduce communication latency, meet a communication latency requirement, and effectively increase a quantity of URLLC UEs in each service area.

To resolve the foregoing problem, embodiments of the application provide a technical solution. The technical solution includes a communication system, a channel measurement method applied to the communication system, a communication apparatus, and the like. The following describes the technical solution provided in the application with reference to the accompanying drawings.

The technical solution in embodiments of the application may be applied to a wireless communication system. For example, the wireless communication system may be a narrowband internet of things (narrowband internet of things, NB-IoT) system, a long term evolution (long term evolution, LTE) system, enhanced mobile broadband (enhanced mobile broadband, eMBB), URLLC, and massive machine type communication (massive machine type communication, mMTC) in three main application scenarios of a 5G mobile communication system, a fourth generation (4th generation, 4G) communication system (for example, an LTE system), a 5G communication system (for example, an NR system), and a future mobile communication system (for example, a 6G communication system). The technical solution in embodiments of the application may also be applied to a satellite communication system or a non-terrestrial communication network (non-terrestrial network, NTN) communication system. The satellite communication system or the NTN communication system may be integrated with a wireless communication system. The technical solution in embodiments of the application may be further applied to an inter-satellite link communication system, a wireless projection system, a virtual reality (virtual reality, VR) communication system, an IAB system, a wireless fidelity (wireless fidelity, Wi-Fi) communication system, an optical communication system, and the like. This is not limited herein.

All aspects, embodiments, or features are presented in the application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of the application, words such as "example" or "for example" are used to indicate an example, an instance, or descriptions. Any embodiment or design scheme described as an "example" in the application should not be explained as being more preferred or having more advantages than another embodiment or design scheme. Exactly, the term "example" is used to present a concept in a specific manner.

A network architecture and a service scenario described in embodiments of the application are intended to describe the technical solutions in embodiments of the application more clearly, and do not constitute a limitation on the technical solutions provided in embodiments of the application. A person of ordinary skill in the art may know that: with the evolution of the network architecture and the emergence of new service scenarios, the technical solutions provided in embodiments of the application are also applicable to similar technical problems.

Embodiments of the application provide a communication system. The communication system is applicable to communication between a first communication apparatus, a second communication apparatus, and a third communication apparatus. The communication system provided in the embodiment of the application may include one or more first communication apparatuses, one or more second communication apparatuses, and one or more third communication apparatuses. A quantity of first communication apparatuses, a quantity of second communication apparatuses, and a quantity of third communication apparatuses in the communication system are not limited in the embodiment of the application. The first communication apparatus is, for example, a network device. The second communication apparatus is, for example, a terminal device or a network device. The third communication apparatus is, for example, a terminal device or a network device. In embodiments of the application, an example in which the first communication apparatus is the network device is used, the second communication apparatus is denoted as the first device, and the third communication apparatus is denoted as the second device, to describe the solutions provided in embodiments of the application. The is a unified description herein, and details are not described below again.

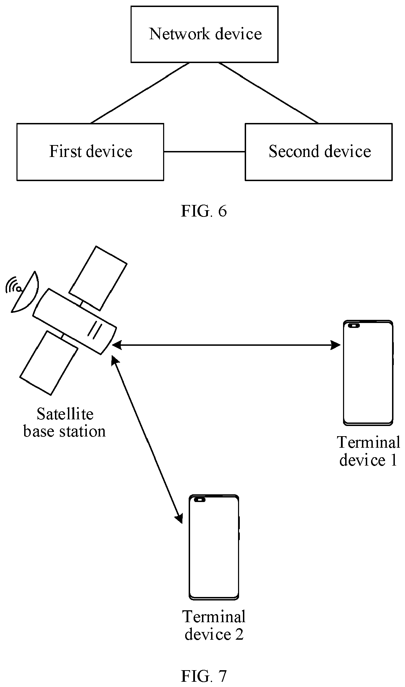

In an example, FIG. 6 is a schematic diagram of an architecture of a communication system according to an embodiment of the application. As shown in FIG. 6, the communication system may include a network device, a first device, and a second device. The network device, the first device, and the second device may be connected to each other in a wireless manner. The network device, the first device, and the second device may exchange data and/or control signaling and the like with each other.

Optionally, the network device in the embodiment of the application is a device that connects the terminal device to a wireless network. The network device may be a node in a radio access network, may be referred to as a base station, or may be referred to as a radio access network (radio access network, RAN) node (or device). The base station may be a distributed antenna system, and a radio frequency head end of the base station may communicate with a specific terminal device. For example, the network device may include an evolved NodeB (NodeB, eNB, or eNodeB, evolved NodeB) in an LTE system or an evolved LTE system (LTE-Advanced, LTE-A), for example, a conventional macro base station eNB and a micro base station eNB in a heterogeneous network scenario; may include a next generation NodeB (next generation NodeB, gNB) in a 5G NR system, may include a transmission point (transmitting and receiving point, TRP), a transmitting point (transmitting point, TP), a home NodeB (for example, home evolved NodeB, or home NodeB, HNB), a baseband unit (baseband unit, BBU), a baseband pool BBU pool, a wireless fidelity (wireless fidelity, Wi-Fi) access point (access point, AP), a mobile switching center, a device that functions as a base station in device-to-device (device-to-device, D2D), vehicle-to-everything (vehicle-to-everything, V2X), or machine-to-machine (machine-to-machine, M2M) communication, and the like; may be abase station device in a 5G network or a network device in a future evolved public land mobile network (public land mobile network, PLMN); may be a wearable device, an in-vehicle device, or the like; may include a central unit (centralized unit, CU) and a distributed unit (distributed unit, DU) in a cloud access network (cloud radio access network, CloudRAN) system; or may include a network device in an NTN, that is, may be deployed on a high-altitude platform or a satellite. In the NTN, the network device may be used as a layer 1 (L1) relay (relay), may be used as a base station, may be used as a DU, or may be used as an integrated access and backhaul (integrated access and backhaul, IAB) node. This is not limited in embodiments of the application. Certainly, the network device may alternatively be a node in a core network.

Optionally, both types of the first device and the second device in the embodiment of the application may be any one of devices such as a base station, a terminal device, a satellite, an IAB node, a relay node, and CPE. This is not limited herein. The first device may be the network device, or the second device may be the network device.

The terminal device in embodiments of the application may be a device configured to implement a wireless communication function, for example, a terminal or a chip that may be used in the terminal. The terminal may be UE in a 5G network or a future evolved PLMN, an access terminal, a terminal unit, a terminal station, a mobile station, a remote station, a remote terminal, a mobile device, a wireless communication device, a terminal agent or a terminal apparatus, various terminals (for example, a robot or a mechanical arm equipped with a wireless transmission module) in an industrial scenario, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device or a wearable device, a VR terminal device, an augmented reality (augmented reality, AR) terminal device, a wireless terminal in industrial control (industrial control), a wireless terminal in self driving (self driving), an unmanned aerial vehicle, a sensor, an actuator, a satellite terminal, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), and the like. Alternatively, the terminal may be a terminal (for example, an internet of vehicles device) in vehicle-to-everything (vehicle-to-everything, V2X), a terminal in device-to-device (Device-to-Device) communication, a terminal in machine-to-machine (machine-to-machine, M2M) communication, or the like.

Optionally, the network device, the first device, and the second device in the embodiment of the application may be deployed on land, including indoors, outdoors, or in a handheld or vehicle-mounted manner, may be deployed on water, or may be deployed on an airplane, a balloon, or an artificial satellite in the air. Application scenarios of the network device and the terminal device are not limited in embodiments of the application.

For example, when the technical solution in embodiments of the application is applied to a satellite communication system, the communication system shown in FIG. 6 may be shown in FIG. 7. FIG. 7 is a schematic diagram of another architecture of a communication system according to an embodiment of the application. The communication system may include a satellite base station, a terminal device 1, and a terminal device 2. The satellite base station shown in FIG. 7 may be considered as the network device in FIG. 6, the terminal device 1 may be considered as the first device in FIG. 6, and the terminal device 2 may be considered as the second device in FIG. 6.

The satellite base station and the terminal device may be connected in a wireless manner, and the satellite base station and the terminal device may exchange data and/or control signaling and the like. The satellite base station may provide a communication service for the terminal device. Specifically, the satellite base station may transmit data to the terminal, and the terminal device may transmit data to the satellite base station. The satellite base station may also communicate with a base station. That is, the satellite may be used as the base station, or may be used as the terminal device.

The satellite base station may be an unmanned aerial vehicle, a hot air balloon, a low earth orbit satellite, a medium earth orbit satellite, a high earth orbit satellite, or the like. Alternatively, the satellite base station may be a non-ground base station, a non-ground device, or the like. This is not limited herein.

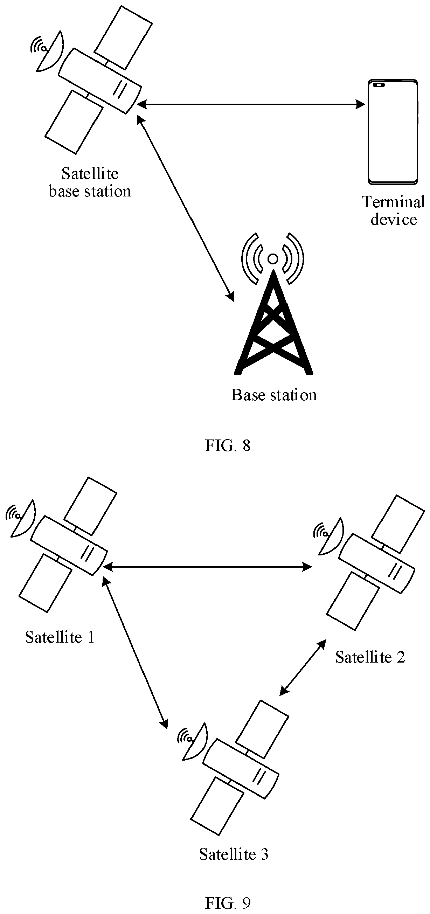

It should be understood that the terminal device in FIG. 7 may be alternatively replaced with a base station. In other words, when the technical solution in embodiments of the application is applied to a satellite communication system, the communication system shown in FIG. 6 may be further shown in FIG. 8. FIG. 8 is a schematic diagram of another architecture of a communication system according to an embodiment of the application. The communication system may include a satellite base station, a terminal device, and a base station. The base station shown in FIG. 8 may be a mobile communication base station (for example, a 5G base station), and may be considered as the first device in FIG. 6, the satellite base station shown in FIG. 8 may be considered as the network device in FIG. 6, and the terminal device may be considered as the second device in FIG. 6. Alternatively, the base station shown in FIG. 8 may be considered as the network device in FIG. 6, the satellite base station shown in FIG. 8 may be considered as the first device in FIG. 6, and the terminal device may be considered as the second device in FIG. 6. The satellite base station, the terminal device, and the base station may be connected in a wireless manner, and the satellite base station, the terminal device, and the base station may exchange data and/or control signaling, and the like.

For another example, when the technical solution in embodiments of the application is applied to an inter-satellite link communication system, the communication system shown in FIG. 6 may be shown in FIG. 9. FIG. 9 is a schematic diagram of another architecture of a communication system according to an embodiment of the application. The communication system may include a satellite 1, a satellite 2, and a satellite 3. The satellite 1 shown in FIG. 9 may be considered as the network device in FIG. 6, the satellite 2 may be considered as the first device in FIG. 6, and the satellite 3 may be considered as the second device in FIG. 6. The satellite 1, the satellite 2, and the satellite 3 may be connected in a wireless manner, and the satellite 1 may exchange data and/or control signaling and the like with the satellite 2 and the satellite 3.

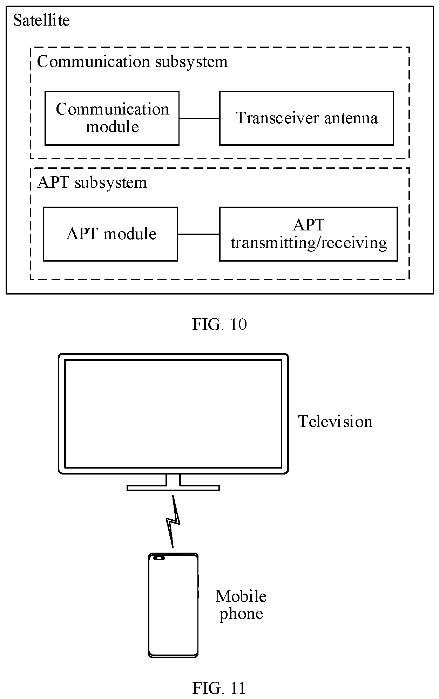

FIG. 10 is a schematic diagram of a system architecture of a satellite according to an embodiment of the application. As shown in FIG. 10, a satellite usually includes two main parts: an acquisition, tracking, and pointing (acquisition, tracking and pointing, APT) subsystem and a communication subsystem. The communication subsystem usually includes a communication module and a transceiver antenna. The communication subsystem is responsible for inter-satellite information transmission, and is a main body of an inter-satellite communication system. The APT subsystem usually includes an APT module and an APT transmitting/receiving module. The APT system is responsible for acquiring, pointing, and tracking between satellites. Acquiring refers to determining a sending direction of an incoming signal. Pointing refers to adjusting a transmitting signal to point to a receiving direction. Tracking refers to continuously adjusting pointing and performing acquiring during an entire communication process.

For another example, when the technical solution in embodiments of the application is applied to a wireless projection system, the communication system shown in FIG. 6 may be shown in FIG. 11. FIG. 11 is a schematic diagram of another architecture of a communication system according to an embodiment of the application. The communication system may include a television and a mobile phone. There may be one or more televisions and mobile phones shown in FIG. 11. The television herein may be considered as any one of the network device, the first device, or the second device in FIG. 6, and the mobile phone may be considered as any one of the network device, the first device, or the second device in FIG. 6. This is not limited herein. The television and the mobile phone may be connected in a wireless manner, and the television and the mobile phone may exchange data and/or control signaling and the like.

For another example, when the technical solution in embodiments of the application is applied to an IAB system, the communication system shown in FIG. 6 may be shown in FIG. 5. There may be one or more IAB donors, IAB nodes, and UEs shown in FIG. 5. The IAB donor herein may be considered as the network device in FIG. 6, the IAB node may be considered as the first device in FIG. 6, and the UE may be considered as the second device in FIG. 6. The IAB donor, the IAB node, and the UE may be connected in a wireless manner, and the IAB donor, the IAB node, and the UE may exchange data and/or control signaling and the like.

A specific structure of an execution body of the method provided in embodiments of the application is not particularly limited in embodiments of the application, provided that a program that records code of the method provided in embodiments of the application can be run to perform communication according to the method provided in embodiments of the application. For example, an execution body of the channel measurement method provided in embodiments of the application may be the network device, the first device, or the second device, or a functional module that can invoke and execute a program and that is in the network device, the first device, or the second device.

In other words, related functions of the network device, the first device, and the second device in embodiments of the application may be implemented by one device, may be implemented by a plurality of devices together, or may be implemented by one or more functional modules in one device. This is not specifically limited in embodiments of the application. It may be understood that the foregoing function may be a network element in a hardware device, a software function running on special-purpose hardware, a combination of hardware and software, or a virtualization function instantiated on a platform (for example, a cloud platform).

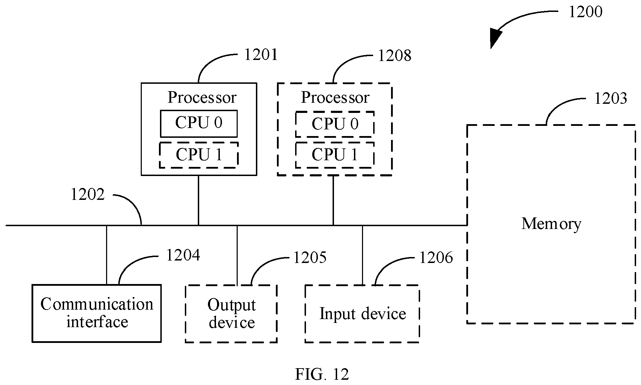

For example, related functions of the network device, the first device, or the second device in embodiments of the application may be implemented by using a communication apparatus 1200 in FIG. 12. FIG. 12 is a schematic diagram of a structure of a communication apparatus 1200 according to an embodiment of the application. The communication apparatus 1200 includes one or more processors 1201, a communication line 1202, and at least one communication interface (in FIG. 12, an example in which only a communication interface 1204 and one processor 1201 are included is used for description), and optionally, may further include a memory 1203.

The processor 1201 may be a central processing unit (central processing unit, CPU), a microprocessor, an application-specific integrated circuit (application-specific integrated circuit, ASIC), or one or more integrated circuits configured to control program execution of the solution in the application.

The communication line 1202 may include a channel, and is configured to connect different components. For example, the communication line 1202 may be a bus, for example, an address bus, a data bus, or a control bus.

The communication interface 1204 may be a transceiver module, and may be configured to communicate with another device or a communication network. For example, the transceiver module may be an apparatus such as a transceiver or a transceiver. Optionally, the communication interface 1204 may alternatively be a transceiver circuit located in the processor 1201, and is configured to implement signal input and signal output of the processor.

The memory 1203 may be an apparatus that has a storage function. For example, the memory may be a read-only memory (read-only memory, ROM) or another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, or the like), magnetic disk storage medium or another magnetic storage device, or any other medium that can carry or store desired program code in a form of instructions or a data structure and that can be accessed by a computer. However, this is not limited. The memory may exist independently and is connected to the processor through the communication line 1202. The memory may alternatively be integrated with the processor.

The memory 1203 is configured to store computer-executable instructions for performing the solution in the application, and execution of the computer-executable instructions is controlled by the processor 1201. The processor 1201 is configured to execute the computer-executable instructions stored in the memory 1203, to implement the channel measurement method provided in embodiments of the application.

Alternatively, in embodiments of the application, the processor 1201 may perform a processing-related function in a channel measurement method provided in the following embodiment of the application, and the communication interface 1204 is responsible for communicating with another device or a communication network. This is not specifically limited in embodiments of the application.

The computer-executable instructions in embodiments of the application may also be referred to as application program code. This is not specifically limited in embodiments of the application.

During specific implementation, in an embodiment, the processor 1201 may include one or more CPUs such as a CPU 0 and a CPU 1 in FIG. 12.

During specific implementation, in an embodiment, the communication apparatus 1200 may include a plurality of processors such as the processor 1201 and a processor 1208 in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 1200 may further include an output device 1205 and an input device 1206. The output device 1205 communicates with the processor 1201, and may display information in a plurality of manners.

The communication system provided in the application is described above. The following describes, with reference to the accompanying drawings, the channel measurement method provided in embodiments of the application.

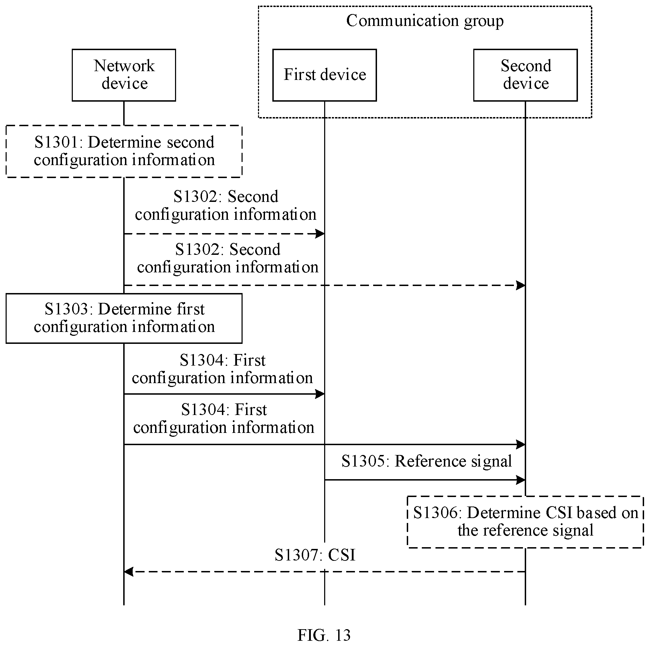

FIG. 13 is a schematic diagram 1 of interaction in a channel measurement method according to an embodiment of the application. The channel measurement method may be applied to the foregoing communication system, and may be performed by the network device, the first device, or the second device in the foregoing communication system. The channel measurement method can reduce communication latency during channel measurement between devices, and improve communication performance. The method may include S1303 to S1305, which are sequentially described below.

S1303: The network device determines first configuration information.

The first configuration information is used to indicate the first device to send a reference signal and indicate the second device to receive the reference signal, and the reference signal is used for channel measurement.

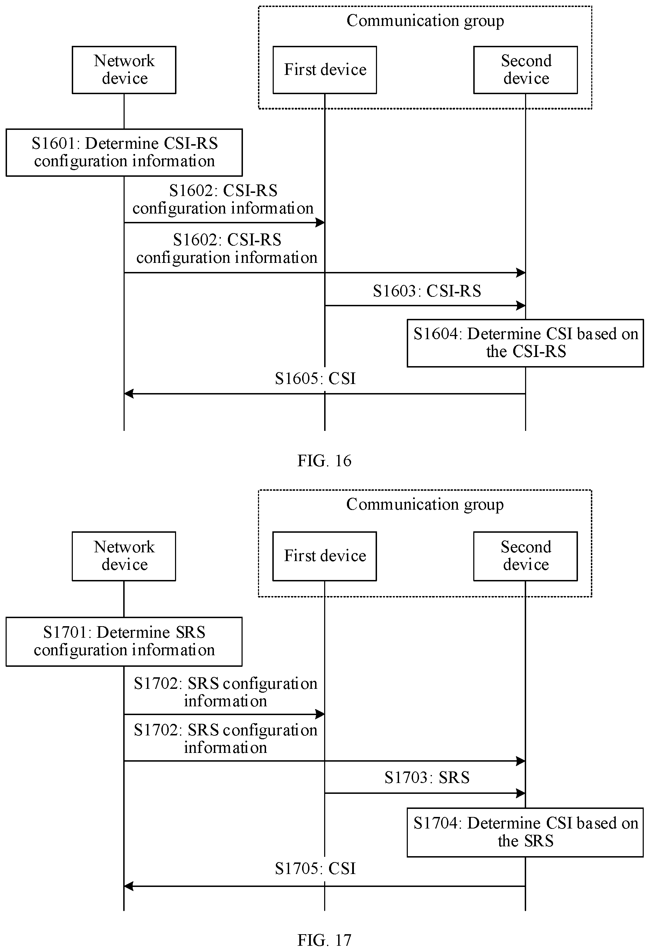

The reference signal herein may include a CSI-RS and/or an SRS. Alternatively, the reference signal may be another reference signal, for example, a reference signal used for sensing. When the reference signal specifically includes a CSI-RS and/or an SRS, for a corresponding implementation of the channel measurement method provided in the embodiment of the application, refer to FIG. 16 or FIG. 17 below. Details are not described herein.

It should be noted that, unless otherwise specified, the first configuration information may also be referred to as reference signal configuration information, and the first configuration information and the reference signal configuration information may be mutually replaced. In addition, when the reference signal includes the CSI-RS, the first configuration information may also be referred to as CSI-RS configuration information; or when the reference signal includes the SRS, the first configuration information may also be referred to as SRS configuration information.

In addition, that the first configuration information is used to indicate the first device to send a reference signal and indicate the second device to receive the reference signal may also be understood as follows: The first configuration information may be used to schedule the first device to send the reference signal and schedule the second device to receive the reference signal.

The first configuration information includes information about a communication group, the information about the communication group is used to determine the first device and the second device, and the communication group includes the first device and the second device.

That the information about the communication group is used to determine the first device and the second device may be understood as follows: The information about the communication group may indicate that devices scheduled by using the first configuration information are the first device and the second device.

Specifically, from a perspective of the network device, the information about the communication group may be understood as follows: To enable the first device and the second device to be correctly scheduled by using the first configuration information, the network device sets one piece of information about a communication group in the first configuration information, to indicate that the devices scheduled by using the first configuration information are the first device and the second device. From a perspective of a device that receives the first configuration information, the information about the communication group may be understood as follows: The device that receives the first configuration information may determine, based on the information about the communication group, whether the device is a device scheduled by using the first configuration information, that is, determine whether the device is the first device or the second device, so as to determine whether to send a reference signal or receive a reference signal.

For example, it is assumed that there are four devices in a cell, which are respectively a terminal 1 to a terminal 4. The network device determines that the communication group includes the terminal 1 and the terminal 2, the terminal 1 is the first device, and the terminal 2 is the second device. In this case, the information about the communication group may be used to determine the terminal 1 and the terminal 2, that is, the information about the communication group may indicate that the devices scheduled by using the first configuration information are the terminal 1 and the terminal 2, and the first configuration information may be used to indicate the terminal 1 to send a reference signal and the terminal 2 to receive the reference signal.

It should be understood that the communication group in the embodiment of the application may be generally explained as "including a plurality of groups including a plurality of devices that have a communication relationship". For example, a plurality of devices that have a communication relationship in the cell may be grouped into one group, and the group may be referred to as one communication group. In S1303, the communication group corresponding to the information about the communication group may be understood as follows: The network device determines one communication group from a plurality of devices in the cell, where the communication group includes the first device and the second device.

Usually, in an industrial manufacturing scenario, as shown in FIG. 1, the controller may communicate with a subordinate bottom-end device. Therefore, the controller and the subordinate bottom-end device may be used as one communication group. For example, the communication group includes the terminal 1 and the terminal 11 in FIG. 1.

In a possible implementation, the communication group may include a communication pair. For example, the terminal 1 and the terminal 11 in FIG. 1 constitute a communication pair.

In some possible embodiments, that the network device determines first configuration information in S1303 may include the following steps: The network device determines, based on a network status, a communication requirement, or the like, a communication group that needs to obtain CSI, and determines the first configuration information based on the communication group that needs to obtain CSI. Certainly, during actual application, the network device may alternatively determine, based on other information (for example, a requirement of each device in a network), a communication group that needs to obtain CSI, and determine the first configuration information based on the communication group that needs to obtain CSI. It should be understood that a specific implementation in which the network device determines the first configuration information is not limited in the embodiment of the application.

S1304: The network device sends the first configuration information to the first device and the second device. Correspondingly, the first device receives the first configuration information sent by the network device, and the second device receives the first configuration information sent by the network device.

In some possible embodiments, the first configuration information may be carried in physical layer signaling and/or higher layer signaling. The physical layer signaling that carries the first configuration information may be physical layer control information, the physical layer control information may include DCI or RxCI, and the higher layer signaling that carries the first configuration information may include RRC signaling or MAC CE signaling. It should be understood that a type of signaling that carries the first configuration information is not limited in the embodiment of the application.

It should be understood that the first configuration information sent by the network device to the first device may be the same as or different from the first configuration information sent by the network device to the second device. This is not limited in the embodiment of the application. Optionally, when the first configuration information sent by the network device to the first device is different from the first configuration information sent by the network device to the second device, the first configuration information may include configuration information 1 and configuration information 2. The network device sends the configuration information 1 (where for example, the configuration information 1 may also be referred to as third configuration information) to the first device, and sends the configuration information 2 (where for example, the configuration information 2 may also be referred to as fourth configuration information) to the second device. The configuration information 1 is used to indicate the first device to send a reference signal to the second device, and the configuration information 2 is used to indicate the second device to receive the reference signal from the first device. Information about a communication group included in the configuration information 1 is used to determine the second device, and information about a communication group included in the configuration information 2 is used to determine the first device.

S1305: The first device sends the reference signal to the second device. Correspondingly, the second device receives the reference signal sent by the first device.

According to the indication of the first configuration information in S1303, the reference signal sent by the first device to the second device may include a CSI-RS and/or an SRS. For example, when the first configuration information is used to indicate the first device to send the CSI-RS and indicate the second device to receive the CSI-RS, the first device sends the CSI-RS to the second device.

The following describes in detail implementations of S1303 to S1305 with reference to examples.

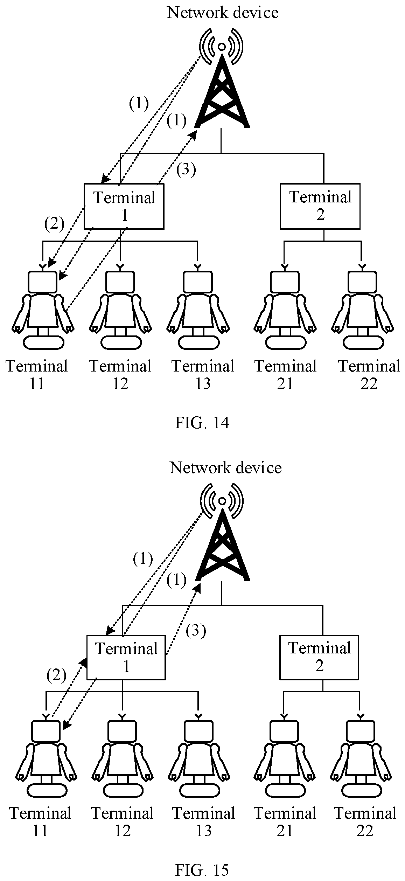

FIG. 14 is a schematic diagram of a sidelink communication scenario according to an embodiment of the application. As shown in FIG. 14, it is assumed that a communication group includes a terminal 1 and a terminal 11, the terminal 1 is a first device, and the terminal 11 is a second device. The channel measurement shown in FIG. 13 is applied, so that when a network device obtains CSI between the terminal 1 and the terminal 11, the following steps may be included:
Step 12.1: The network device determines first configuration information.
Step 12.2 (refer to (1) in FIG. 14): The network device sends the first configuration information to the terminal 1 and the terminal 11. Correspondingly, the terminal 1 and the terminal 11 receive the first configuration information sent by the network device.
Step 12.3 (refer to (2) in FIG. 14): The terminal 1 sends a reference signal to the terminal 11 based on the first configuration information. Correspondingly, the terminal 11 receives, based on the first configuration information, the reference signal sent by the terminal 1.

It can be learned from a comparison between step 12.1 to step 12.3 and step 1.1 and step 12 that, in step 1.1 and step 1.2, the terminal 1 needs to indicate a reference signal in SCI, and sends the SCI to a terminal 12; and the terminal 11 needs to parse the SCI, and receive, based on the reference signal indicated by the SCI, the reference signal sent by the terminal 11. However, in the embodiment provided in the application, based on an indication of the first configuration information, the terminal 1 may send the reference signal, and the terminal 11 may receive a reference signal. That is, for channel information obtaining, the terminal 11 does not need to indicate the reference signal in the SCI and send the SCI to the second device, and the second device does not need to parse the SCI.

In conclusion, the first device and the second device may perform channel measurement based on the first configuration information sent by the network device. For example, the first device sends the reference signal to the second device based on the first configuration information, and the second device receives, based on the first configuration information, the reference signal sent by the first device and performs channel measurement. In this way, the first device does not need to send a reference signal configuration to the second device, so that control information overheads can be reduced, and communication latency can be reduced.

In the embodiment of the application, the network device may further change the information about the communication group, to change the first device and the second device that are determined by using the information about the communication group, so that a device scheduled by using the first configuration information changes accordingly. In this way, the network device may indicate, by changing the information about the communication group, different communication groups to perform channel measurement, so that flexible indication of the communication groups and dynamic switching between communication links are implemented, thereby improving communication performance. The following provides descriptions with reference to Example 1 and Example 2.

Example 1: At a first moment, as shown in FIG. 14, the network device determines the terminal 1 as the first device, determines the terminal 11 as the second device, and determines corresponding first configuration information. In this case, the network device may indicate, by sending the first configuration information, the terminal 1 to send a reference signal, and indicate, by sending the first configuration information, the terminal 11 to receive the reference signal, to perform channel measurement between the terminal 1 and the terminal 11. At a second moment, as shown in FIG. 15, the network device may determine the terminal 11 as the first device, determine the terminal 1 as the second device, and determine corresponding first configuration information. In this case, the network device may indicate, by sending the first configuration information, the terminal 11 to send a reference signal, and indicate, by sending the first configuration information, the terminal 1 to receive the reference signal, to perform channel measurement between the terminal 1 and the terminal 11. For a process in which the network device in FIG. 15 obtains CSI between the terminal 1 and the terminal 11, refer to step 12.1 to step 12.5. A specific implementation thereof is not described herein.

Example 2: In an industrial manufacturing scenario, as shown in FIG. 14, the network device may schedule, by using the channel measurement method shown in FIG. 13, the terminal 1 to send a reference signal to the terminal 11, to obtain channel information of a communication link between the terminal 1 and the terminal 11, that is, the first device is the terminal 1, and the second device is the terminal 11. Then, the network device may schedule, based on the channel information of the communication link between the terminal 1 and the terminal 11, the terminal 1 and the terminal 11 to perform sidelink communication with each other. If initial transmission fails when the terminal 1 and the terminal 11 perform sidelink communication with each other, the network device may communicate with the terminal 11 through a Uu interface. Specifically, the network device may send a reference signal to the terminal 11, to obtain channel information of a communication link between the network device and the terminal 11. That is, the first device is the network device, and the second device is the terminal 11. Then, the network device may communicate with the terminal 11 based on the channel information between the network device and the terminal 11. The network device may communicate with the terminal 11 through a Uu interface, and retransmit data to the terminal 11. In this way, channel measurement may be performed by flexibly changing the information about the communication group and CSI may be obtained by flexibly changing the information about the communication group, so that communication links are quickly switched, thereby reducing latency.

In the embodiment of the application, with reference to the descriptions of types of the first device and the second device in the communication system, it can be learned that the types of the first device and the second device may be any one of devices such as a base station, a terminal device, a satellite, an IAB node, a relay node, and CPE. On the basis, the network device may further perform channel measurement by changing the information about the communication group and obtain CSI by changing the information about the communication group, so that communication links between different types of devices are flexibly switched, thereby reducing latency. In addition, the network device may centrally schedule resources between the different types of devices. In other words, the communication links may be centrally scheduled, and the resources may be dynamically shared, so that resource utilization efficiency is improved and processing complexity of the terminal device is reduced. The following provides descriptions with reference to Example 3 and Example 4.

Example 3: In a satellite communication scenario, as shown in FIG. 8, the base station may send the first configuration information to the satellite and the terminal device. The first configuration information may be used to indicate the satellite to send a reference signal and indicate the terminal device to receive the reference signal. The satellite receives the first configuration information and sends the reference signal to the terminal device based on the first configuration information. The terminal device receives the first configuration information and receives, based on the first configuration information, the reference signal sent by the satellite. That is, the first device is the satellite, and the second device is the terminal device. For a specific implementation, refer to the channel measurement shown in FIG. 13. Details are not described herein again. In this way, the network device (base station) may centrally coordinate communication links between the space, the ground, and the air, so that fast communication between the satellite and the terminal can be implemented, thereby reducing latency and reducing configuration information overheads.

In addition, when satellite communication transmission performance is poor, the base station may alternatively send a reference signal to the terminal device (that is, the first device is the base station, and the second device is the terminal device), to obtain channel information between the base station and the terminal device, and implement communication between the base station and the terminal device. For example, the information about the communication group in the first configuration information is used to determine the base station and the terminal device, the first configuration information is used to indicate the base station to send the reference signal and indicate the terminal device to receive the reference signal, thereby implementing communication between the base station and the terminal device. In this way, flexible switching between a satellite communication link and a terrestrial base station communication link can be implemented, so that latency is reduced, thereby improving communication performance.

Example 4: In an IAB communication scenario, as shown in FIG. 5, a base station may send first configuration information to an IAB node and a terminal device. The first configuration information may be used to indicate the IAB node to send a reference signal and indicate the terminal device to receive the reference signal, that is, the first device is the IAB node, and the second device is the terminal device. The IAB node receives the first configuration information and sends the reference signal to the terminal device based on the configuration information. The terminal device receives the first configuration information and receives, based on the configuration information, the reference signal sent by the IAB node. For a specific implementation, refer to the channel measurement shown in FIG. 13. Details are not described herein again.

In addition, when communication transmission performance of the IAB node is poor, the network device (for example, an access network device or a core network device) may schedule the base station to send a reference signal to the terminal device (that is, the first device is the base station, and the second device is the terminal device), to obtain channel information between the base station and the terminal device, and implement communication between the base station and the terminal device. For example, the network device may indicate the information about the communication group in the first configuration information as being used to determine the base station and the terminal device, so that the first configuration information is used to indicate the base station to send the reference signal and indicate the terminal device to receive the reference signal, thereby implementing communication between the base station and the terminal device. In this way, flexible switching between an IAB communication link and a terrestrial base station communication link can be implemented and CSI can be obtained, so that latency is reduced, thereby improving communication performance.

In addition, for a backhaul link and an access link in IAB communication, the network device may flexibly schedule communication of a plurality of links through channel measurement shown in FIG. 13, to implement dynamic resource sharing, reduce resources, and reduce complexity. In addition, for various links (for example, a Uu link, a sidelink link, an IAB link, and a satellite communication link), the network device may quickly and efficiently obtain unified CSI of the various links.

In the embodiment of the application, an implementation of the first configuration information in S 1303 may include one or more of Manner 1 to Manner 8, which are separately described in the following.

Manner 1: The information about the communication group may include one or more of the following: a first identifier, a second identifier, link type information, and a link number. The first identifier corresponds to the first device, and the second identifier corresponds to the second device. During specific implementation, Manner 1 may include Example 5 to Example 7.

Example 5: The information about the communication group may include the first identifier and/or the second identifier. A correspondence between a device and a device identifier may be set. The correspondence between a device and a device identifier may include a correspondence between the first identifier and the first device and a correspondence between the second identifier and the second device. In this way, the first identifier may be used to determine the first device, and the second identifier may be used to determine the second device.

For example, it is assumed that the correspondence between a device and a device identifier is at least one row shown in Table 1, where X is an integer. In this case, if the first identifier is 1, it may be determined that the first device is a terminal 1; if the second identifier is 0, it may be determined that the second device is a base station, and so on. Other examples are not enumerated herein. It should be understood that the first identifier may also be referred to as a first device number (index), and the second identifier may also be referred to as a second device number.

**Table 1**

| Device | Device identifier |
|---|---|
| Base station | 0 |
| Terminal 1 | 1 |
| Terminal 2 | 2 |
| Terminal 3 | 3 |
| Terminal 4 | 4 |
| IAB node | 5 |
| Relay node | 6 |
| CPE | 7 |
| Satellite | 8 |
| Multicast device group (for example, including a terminal 1 to a terminal 4) | 9 |
| Broadcast device group (including all devices in a cell) | 10 |
| ... | ... |
| Device X | X |

It should be understood that the first device or the second device may obtain the foregoing correspondence (for example, in Table 1) between a device and a device identifier, to determine a device corresponding to the first identifier or a device corresponding to the second identifier. In this way, the first device and the second device are determined by using the information about the communication group. A manner of obtaining the correspondence between a device and a device identifier may be predefined in a protocol, or may be indicated by the network device through signaling. A specific implementation is not limited in the embodiment of the application.

In Example 5, the network device may send same first configuration information to the first device and the second device when the information about the communication group includes the first identifier and the second identifier. The network device may send different first configuration information to the first device and the second device when the information about the communication group includes the first identifier or the second identifier. For example, the first configuration information may include configuration information 1 and configuration information 2. The configuration information 1 is used to indicate the first device to send a reference signal to the second device, and the configuration information 2 is used to indicate the second device to receive the reference signal from the first device. The configuration information 1 includes the second identifier, and the configuration information 2 includes the first identifier. The network device sends the configuration information 1 to the first device, and sends the configuration information 2 to the second device. In other words, the first identifier and the second identifier may be sent in same configuration information, or may be sent in different configuration information.

Example 6: The information about the communication group includes the link type information.

The link type information may indicate a type of a communication link. For example, the link type information may indicate that the type of the communication link is Uu communication, sidelink communication, IAB communication, satellite communication, full duplex, relay communication, unicast communication, multicast communication, broadcast communication, or the like.

At least one first correspondence may be set, where the first correspondence is a correspondence between a piece of link type information, a link sending device identifier, and a link receiving device identifier. The link sending device identifier and the link receiving device identifier may respectively correspond to one device, or may respectively correspond to a plurality of devices. A manner of determining the devices respectively corresponding to the link sending device identifier and the link receiving device identifier may be implemented by using Table 1, and details are not described herein again. The link sending device identifier may indicate that a corresponding device is used to send a reference signal in a communication link, and the link receiving device identifier may indicate that a corresponding device is used to receive the reference signal in the communication link. For example, with reference to Table 1, when the link sending device identifier is 0, it indicates that the base station is used to send the reference signal in the communication link. In other words, the link sending device identifier may indicate a device that sends a reference signal and that is in devices at two ends of a link, and the link receiving device identifier may indicate a device that receives the reference signal and that is in the devices at the two ends of the link.

It should be understood that the link sending device identifier in the at least one first correspondence herein may include the first identifier, and the link receiving device identifier in the at least one first correspondence may include the second identifier. In other words, the at least one first correspondence may include a correspondence between the link type information, the first identifier, and the second identifier, where there is a correspondence between the link type information and the first device and between the link type information and the second device. In this way, the first device and the second device may be determined (or indicated) by using the link type information.

For example, it is assumed that the at least one first correspondence is in at least one row shown in Table 2-1, where L1 and L2 may be integers. With reference to Table 1, it can be learned that if the link type information is Uu communication, it may be determined that the first device is the base station, and the second device is the terminal 1, where if the device that receives the first configuration information is the terminal 1, the terminal 1 may determine that the device that sends the reference signal is the base station; if the link type information is sidelink communication, it may be determined that the first device is the terminal 1, and the second device is the terminal 2, where if the device that receives the first configuration information is the terminal 1, the terminal 1 may determine that the device that receives the reference signal is the terminal 2, and so on. Other examples are not enumerated herein.

**Table 2-1**

| Link type information | Link sending device identifier | Link receiving device identifier |
|---|---|---|
| Uu communication | 0 | 1 |
| Sidelink communication | 1 | 2 |
| IAB communication | 0 | 2 |
| Satellite communication | 8 | 0 |
| ... | ... | ... |
| Link L | L1 | L2 |

Optionally, the first correspondence may be a device-level correspondence, that is, different devices may have different first correspondences.

For example, a first correspondence for a device X1 may be in at least one row shown in Table 2-2, where X1 and Y1 may be integers. In Table 2-2, an example in which the device X1 is a receiving device is used. The device X1 may alternatively be a sending device, that is, the sending device identifier and a receiving device identifier may be replaced. For example, a sending device identifier of a link corresponding to Uu communication is X1, and a receiving device identifier is 0. In this case, the first configuration information includes the link type information, and the first device and the second device may be determined based on the link type information, to further determine sending and/or receiving of the reference signal.

**Table 2-2**

| Link type information | Link sending device identifier | Link receiving device identifier |
|---|---|---|
| Uu communication | 0 | X1 |
| Sidelink communication | 1 | X1 |
| Satellite communication | 8 | X1 |
| ... | ... | ... |
| Link L1 | Y1 | X1 |

For example, a first correspondence for a device X2 may be in at least one row shown in Table 2-3, where X2 and Y2 may be integers. In Table 2-3, an example in which the device X2 is a receiving device is used. The device X2 may alternatively be a sending device, that is, a sending device identifier and a receiving device identifier may be replaced. For example, a sending device identifier of a link corresponding to Uu communication is X2, and a receiving device identifier is 0. In this case, the first configuration information includes the link type information, and the first device and the second device may be determined based on the link type information, to further determine sending and/or receiving of the reference signal.

**Table 2-3**

| Link type information | Link sending device identifier | Link receiving device identifier |
|---|---|---|
| Uu communication | 0 | X2 |
| Sidelink communication | 1 | X2 |
| IAB communication | 2 | X2 |
| ... | ... | ... |
| Link L2 | Y2 | X2 |

It should be understood that the first device or the second device may obtain the at least one first correspondence (for example, in Table 2-1, Table 2-2, or Table 2-3), to determine the first device and the second device that are indicated by the link type information. A manner of obtaining the at least one first correspondence may be predefined in a protocol, or may be indicated by the network device through signaling. A specific implementation is not limited in the embodiment of the application.

Example 7: The information about the communication group includes the link number.

The link number may indicate two communication parties in a communication link, or the link number may be understood as representing two communication parties in a communication group. At least one second correspondence may be set, where the second correspondence is a correspondence between a link number, a link sending device identifier, and a link receiving device identifier.

In other words, the at least one second correspondence may include a correspondence between the link number, the first identifier, and the second identifier. In this way, the first device and the second device may be determined (or indicated) by using the link number. For example, it is assumed that at least one second correspondence is in at least one row shown in Table 3-1, where P, X, and Y may be integers. With reference to Table 1, it can be learned that if the link number is a link 0, it may be determined that the first device is the base station, and the second device is the terminal 1, where if the device that receives the first configuration information is the terminal 1, the terminal 1 may determine that the device that sends the reference signal is the base station; if the link number is a link 1, it may be determined that the first device is the base station, and the second device is the terminal 2, and in this case, the base station may determine that the device that receives the reference signal is the terminal 2, and so on. Other examples are not enumerated herein.

**Table 3-1**

| Link number | Link sending device identifier | Link receiving device identifier |
|---|---|---|
| Link 0 | 0 | 1 |
| Link 1 | 0 | 2 |
| Link 2 | 1 | 2 |
| Link 3 | 1 | 3 |
| ... | ... | ... |
| Link P | Y | X |

Optionally, the second correspondence may be a device-level correspondence, that is, different devices may have different second correspondences.

For example, a second correspondence for a device X1 may be in at least one row shown in Table 3-2, where P1, Y1, and X1 may be integers. In Table 3-2, an example in which the device X1 is a receiving device is used. Certainly, the device X1 may alternatively be a sending device, that is, a sending device identifier and a receiving device identifier may be replaced. For example, a sending device identifier of a link corresponding to the link 0 is X1, and a receiving device identifier is 0. In this case, the first configuration information includes the link type information, and the first device and the second device may be determined based on the link type information, to further determine sending and/or receiving of the reference signal.

**Table 3-2**

| Link type information | Link sending device identifier | Link receiving device identifier |
|---|---|---|
| Link 0 | 0 | X1 |
| Link 1 | 1 | X1 |
| Link 2 | 2 | X1 |
| Link 3 | 8 | X1 |
| ... | ... | ... |
| Link P1 | Y1 | X1 |

For example, a first correspondence for a device X2 may be in at least one row shown in Table 3-3, where P, Y2, and X2 are integers. In Table 3-3, an example in which the device X2 is a receiving device is used. Certainly, the device X2 may alternatively be a sending device, that is, a sending device identifier and a receiving device identifier may be replaced. For example, a sending device identifier of the link 0 is X2, and a receiving device identifier is 0. In this case, the first configuration information includes the link type information, and the first device and the second device may be determined based on the link type information, to further determine sending and/or receiving of the reference signal.

**Table 3-3**

| Link type information | Link sending device identifier | Link receiving device identifier |
|---|---|---|
| Link 0 | 0 | X2 |
| Link 1 | 1 | X2 |
| Link 2 | 2 | X2 |
| Link 3 | 8 | X2 |
| ... | ... | ... |
| Link P2 | Y2 | X2 |

It should be understood that the first device or the second device may obtain the at least one second correspondence (for example, in Table 3-1, Table 3-2, or Table 3-3), to determine the first device and the second device that are indicated by the link number. A manner of obtaining the at least one second correspondence may be predefined in a protocol, or may be indicated by the network device through signaling. A specific implementation is not limited in the embodiment of the application.

With reference to Example 5 to Example 7, it can be learned that the network device may indicate, in a plurality of manners, the first device and the second device to perform channel measurement, and the indication manners are more flexible.

In Manner 1, optionally, the first identifier may be any one of a device-level identifier, a device group-level identifier, or a broadcast-level identifier, and the second identifier may be any one of a device-level identifier, a device group-level identifier, or a broadcast-level identifier.

When the first identifier is the device-level identifier, the first identifier may be used to indicate a first device to send a reference signal. When the first identifier is the device group-level identifier, the first identifier may be used to indicate a first device in a multicast device group to send a reference signal. When the first identifier is the broadcast-level identifier, the first identifier may be used to indicate a first device in a broadcast device group to send a reference signal.

For example, Table 1 is still used as an example. When the first identifier is 1, it indicates that the first identifier is used to indicate the terminal 1 to send a reference signal. In this case, the first identifier is the device-level identifier. When the first identifier is 9, it indicates that the first identifier is used to indicate a multicast device group (for example, including the terminal 1 to a terminal 4) to send a reference signal. In this case, the first identifier is the device group-level identifier. When the first identifier is 10, it indicates that the first identifier is used to indicate a broadcast device group (including all devices in the cell) to send a reference signal. In this case, the first identifier is the broadcast-level identifier.

When the second identifier is the device-level identifier, the second identifier may be used to indicate a second device to receive a reference signal. When the second identifier is the device group-level identifier, the second identifier may be used to indicate a second device in a multicast device group to receive a reference signal. When the second identifier is the broadcast-level identifier, the second identifier may be used to indicate a second device in a broadcast device group to receive a reference signal.

In this way, the device identifier (including the first identifier and the second identifier) is set to any one of the device-level identifier, the device group-level identifier, and the broadcast-level identifier, so that flexible switching between a unicast, multicast, and broadcast communication link can be implemented and CSI can be obtained. In addition, the network device may flexibly schedule resources for various communication manners, to improve communication performance. In addition, a reference signal sent by one device can be received by a plurality of devices when the device identifier (including the first identifier and/or the second identifier) is the device group-level identifier or the broadcast-level identifier, so that reference signal overheads are reduced, thereby improving communication performance.

It may be understood that, in the embodiment of the application, the device-level identifier may also be referred to as a UE-level identifier, and the device-level identifier may also be referred to as a multicast-level identifier.

Manner 2: The information about the communication group may include a reference signal resource identifier, and a correspondence exists between the reference signal resource identifier and the communication group.

In other words, the first device and the second device may be determined (or indicated) by using the reference signal resource identifier. In this way, the reference signal resource identifier may implicitly indicate the information about the communication group, to reduce information overheads. The correspondence between the reference signal resource identifier and the communication group may be predefined in a protocol, or may be indicated by the network device to the terminal device through signaling. A specific implementation is not limited in the embodiment of the application.

For example, it is assumed that the correspondence between the reference signal resource identifier and the communication group is in at least one row shown in Table 4-1. If the reference signal resource identifier is an RS 1, it may be determined that the communication group includes a base station and a terminal 1, the base station is the first device, and the terminal 1 is the second device; if the reference signal resource identifier is an RS 2, it may be determined that the communication group includes a terminal 1 and a terminal 2, the terminal 1 is the first device, the terminal 2 is the second device, and so on. Other examples are not enumerated herein.

**Table 4-1**

| Communication group | Reference signal resource identifier |
|---|---|
| Abase station and a terminal 1 are included, where the base station is a first device, and the terminal 1 is a second device. | RS 1 |
| The terminal 1 and a terminal 2 are included, where the terminal 1 is the first device, and the terminal 2 is the second device. | RS 2 |
| The terminal 2 and a terminal 3 are included, where the terminal 2 is the first device, and the terminal 3 is the second device. | RS 3 |
| The terminal 2 and a terminal 4 are included, where the terminal 2 is the first device, and the terminal 4 is the second device. | RS 4 |
| ... | ... |
| A device Q1 and a device Q2 are included, where the device Q1 is the first device, and the device Q2 is the second device. | RS q |

In Manner 2, optionally, the correspondence (denoted as a third correspondence) between the reference signal resource identifier and the communication group may be a device-level correspondence, that is, different devices may have different third correspondences.

For example, a third correspondence for a device X1 may be in at least one row shown in Table 4-2, where X1, Q1, and q1 may be integers. If the reference signal resource identifier is an RS 1, it may be determined that the communication group includes a base station and the device X1, the base station is the first device, and the device X1 is the second device; if the reference signal resource identifier is an RS 2, it may be determined that the communication group includes a terminal 2 and the device X1, the terminal 2 is the first device, the device X1 is the second device, and so on. Other examples are not enumerated herein.

**Table 4-2**

| Communication group | Reference signal resource identifier |
|---|---|
| Abase station and a device X1 are included, where the base station is a first device, and the device X1 is a second device. | RS 1 |
| A terminal 2 and the device X1 are included, where the terminal 2 is the first device, and the device X1 is the second device. | RS 2 |
| The device X1 and a terminal 3 are included, where the device X1 is the first device, and the terminal 3 is the second device. | RS 3 |
| ... | ... |
| A device Q1 and the device X1 are included, where the device Q1 is the first device, and the device X1 is the second device. | RS q1 |

For example, a third correspondence for a device X2 may be in at least one row shown in Table 4-3, where X2, Q2, and q2 are integers. If the reference signal resource identifier is an RS 1, it may be determined that the communication group includes a base station and the device X2, the base station is the first device, and the device X2 is the second device; if the reference signal resource identifier is an RS 2, it may be determined that the communication group includes the device X2 and a terminal 1, the device X2 is the first device, the terminal 1 is the second device, and so on. Other examples are not enumerated herein.

**Table 4-3**

| Communication group | Reference signal resource identifier |
|---|---|
| Abase station and a device X2 are included, where the base station is a first device, and the device X2 is a second device. | RS 1 |
| The device X2 and a terminal 1 are included, where the device X2 is the first device, and the terminal 1 is the second device. | RS 2 |
| A terminal 3 and the device X2 are included, where the terminal 3 is the first device, and the device X2 is the second device. | RS 3 |
| ... | ... |
| A device Q2 and the device X2 are included, where the device Q2 is the first device, and the device X2 is the second device. | RS q2 |

Optionally, the information about the communication group may include a sending reference signal resource identifier and a receiving reference signal resource identifier.

Optionally, a correspondence exists between the sending reference signal resource identifier and the communication group, and/or a correspondence exists between the receiving reference signal resource identifier and the communication group.

For example, a correspondence between the sending reference signal resource identifier and the communication group for a device X1 may be in at least one row shown in Table 4-4, where X1, T1, and t1 may be integers. If the sending reference signal resource identifier is an RS 1, it may be determined that the communication group includes the device X1 and a base station, the device X1 is the first device, and the base station is the second device; if the sending reference signal resource identifier is an RS 2, it may be determined that the communication group includes the device X1 and a terminal 2, the device X1 is the first device, the terminal 2 is the second device, and so on. Other examples are not enumerated herein.

**Table 4-4**

| Communication group | Sending reference signal resource identifier |
|---|---|
| A device X1 and a base station are included, where the device X1 is a first device, and the base station is a second device. | RS 1 |
| The device X1 and a terminal 2 are included, where the device X1 is the first device, and the terminal 2 is the second device. | RS 2 |
| The device X1 and a terminal 3 are included, where the device X1 is the first device, and the terminal 3 is the second device. | RS 3 |
| ... | ... |
| The device X1 and a device T1 are included, where the device X1 is the first device, and the device T1 is the second device. | RS t1 |

For example, a correspondence between the receiving reference signal resource identifier and the communication group for a device X1 may be in at least one row shown in Table 4-5, where X1, R1, and r1 are integers. If the receiving reference signal resource identifier is an RS 1, it may be determined that the communication group includes a base station and the device X1, the base station is the first device, and the device X1 is the second device; if the receiving reference signal resource identifier is an RS 2, it may be determined that the communication group includes a terminal 2 and the device X1, the terminal 2 is the first device, the device X1 is the second device, and so on. Other examples are not enumerated herein.

**Table 4-5**

| Communication group | Receiving reference signal resource identifier |
|---|---|
| Abase station and a device X1 are included, where the base station is a first device, and the device X1 is a second device. | RS 1 |
| A terminal 1 and the device X1 are included, where the terminal 1 is the first device, and the device X1 is the second device. | RS 2 |
| A terminal 3 and the device X1 are included, where the terminal 3 is the first device, and the device X1 is the second device. | RS 3 |
| ... | ... |
| A device R1 and the device X1 are included, where the device R1 is the first device, and the device X1 is the second device. | RS r1 |

In this way, the reference signal resource identifier may indicate the information about the communication group, to reduce information overheads.

In Manner 2, it can be learned from Table 3-1 that, the link number may indicate the communication group. Based on this, an implementation in which the correspondence exists between the reference signal resource identifier and the communication group may include: A correspondence exists between the reference signal resource identifier and the link number.

For example, it is assumed that the correspondence between the reference signal resource identifier and the link number is in at least one row shown in Table 5, where j, k1, and k2 are integers. With reference to Table 3-1, it can be learned that, if the reference signal resource identifier is an RS 1, it may be determined that the first device is a base station, and the second device is a terminal 1, where if the device that receives the first configuration information is the terminal 1, the terminal 1 may determine that the device that sends the reference signal is the base station; if the reference signal resource identifier is an RS 5, it may be determined that the first device is a base station, and the second device is a terminal 2, and in this case, the base station may determine that the device that receives the reference signal is the terminal 2, and so on. Other examples are not enumerated herein.

**Table 5**

| Link number | Reference signal resource identifier |
|---|---|
| Link 0 | RS 1-RS 4 |
| Link 1 | RS 5 |
| Link 2 | RS 6 |
| Link 3 | RS 7 |
| ... | ... |
| Link j | RS k1-RS k2 |

Optionally, the reference signal resource identifier and the link number may be in a device-level correspondence, that is, different devices may have different correspondences. The is similar to the correspondence between the reference signal resource identifier and the communication group, and details are not described herein again.

Optionally, a correspondence exists between the sending reference signal resource identifier and the link number, and/or a correspondence exists between the receiving reference signal resource identifier and the link number. The is similar to the correspondence between the sending reference signal resource identifier and the communication group and the correspondence between the receiving reference signal resource identifier and the communication group, and details are not described herein again.

Manner 3: The first configuration information is the device-level configuration information or the device group-level configuration information.

The first configuration information may be carried in physical layer signaling (for example, RxCI signaling) and/or higher layer signaling (for example, RRC signaling).

For example, when the first configuration information is carried in the higher layer signaling, and the first configuration information is the device-level configuration information, the first configuration information may be scheduled by using user-level RxCI and transmitted by using a user-level physical reception link shared channel (physical reception link shared channel, PRxSCH). When the first configuration information is carried in the higher layer signaling (for example, RRC signaling), and the first configuration information is the device group-level configuration information, the first configuration information may be scheduled by using group RxCI and transmitted by using a group PRxSCH.

When the first configuration information is carried in the physical layer signaling, and the first configuration information is the device-level configuration information, the first configuration information may be transmitted by using user-level RxCI. When the first configuration information is carried in the physical layer signaling, and the first configuration information is device group-level configuration information, the first configuration information may be transmitted by using group RxCI.

In Manner 3, for example, when the first configuration information is the device group-level configuration information, the first configuration information may be group RRC signaling, and the group RRC signaling is carried on a group physical shared channel scheduled by using control information scrambled by using a group identifier; or the first configuration information may be group physical layer control information, and the group physical layer control information is scrambled by using a group identifier. In a possible implementation, the group identifier may be a G-RNTI.

For example, the group identifier is a G-RNTI, and one device group corresponds to one G-RNTI. For example, as shown in FIG. 14, a device group 1 includes a terminal 1, a terminal 11, a terminal 12, and a terminal 13, and a device group 2 includes a terminal 2, a terminal 21, and a terminal 22. The device group 1 corresponds to a G-RNTI 1, and the device group 2 corresponds to a G-RNTI 2. The network device may configure the G-RNTI 1 for a device in the device group 1, and configure the RNTI 2 for a device in the device group 2. The device in the device group 1 may parse the group physical shared channel or the group physical layer control information by using the G-RNTI 1, and the device in the device group 2 may parse the group physical shared channel or the group physical layer control information by using the RNTI 2. In this way, when the first configuration information is the device group-level configuration information, scrambling is performed by using different G-RNTIs, so that the first configuration information can be received by different device groups, and interference randomization can also be implemented, so that the first configuration information can be used to schedule a device group and obtain CSI between devices in the device group.

It should be understood that cyclic redundancy check (cyclic redundancy check, CRC) bits may be added in information bits of RxCI to implement an error detection function, and different types of RNTIs may be used for scrambling in the CRC bits, so that the RNTIs are implicitly encoded in the CRC bits. It should be further understood that different RNTIs may be used to identify terminal devices and/or distinguish between purposes of the RxCI.

In Manner 3, for example, the first configuration information is the device-level configuration information, and the first configuration information may include a sending reference signal resource list and a receiving reference signal resource list.

The sending reference signal resource list may include resource identifiers of one or more reference signals, and may be used to indicate to send the one or more reference signals. The receiving reference signal resource list may include resource identifiers of one or more reference signals, and may be used to indicate to receive the one or more reference signals. For example, when the network device sends the first configuration information to the terminal 1, the terminal 1 may send one or more reference signals based on an indication of the sending reference signal resource list, and receive one or more reference signals based on an indication of the receiving reference signal resource list. In this way, the first configuration information may indicate one or more reference signals that need to be sent by one device and/or one or more reference signals that need to be received by the device, so that signaling overheads are reduced.

For example, the sending reference signal resource list may include a reference signal resource 1 to a reference signal resource N1, indicating that reference signals that need to be sent by the device that receives the first configuration information include the reference signal resource 1 to the reference signal resource N1. When the reference signal is a CSI-RS, the sending reference signal resource list may be referred to as a CSI-RS sending resource configuration (transmission CSI-RS resource configuration), and a message format of the CSI-RS sending resource configuration may be as follows:
"Transmission CSI-RS resource configuration: Resource 1-resource N1."

For example, the receiving reference signal resource list may include a reference signal resource 1 to a reference signal resource N2, indicating that reference signals that need to be received by the device that receives the first configuration information include the reference signal resource 1 to the reference signal resource N2. When the reference signal is a CSI-RS, the receiving reference signal resource list may be referred to as a CSI-RS receiving resource configuration (reception CSI-RS resource configuration), and a message format of the CSI-RS receiving resource configuration may be as follows:
"Reception CSI-RS resource configuration: Resource 1-resource N2."

In Manner 3, the first configuration information is the device-level configuration information, and the first configuration information may include a sending indication and/or a receiving indication. The sending indication may indicate the first device to send a reference signal, and the receiving indication may indicate the second device to receive the reference signal.

For example, it is assumed that the first device is UE 1, the second device is UE 2, and a reference signal resource of the UE 1 includes a reference signal resource 1 to a reference signal resource 4, which respectively correspond to a beam 1 to a beam 4 of the UE 1. In this case, the sending indication included in the first configuration information may indicate the UE 1 to send the reference signal resource 1. A message format of the sending indication may be as follows:
"Resource 1: Transmission-reception indication--------transmission".

For example, it is assumed that the first device is UE 1, the second device is UE 2, and a reference signal resource of the UE 2 includes a reference signal resource 1 to a reference signal resource 4, which respectively correspond to a beam 1 to a beam 4 of the UE 1. In this case, the receiving indication included in the first configuration information may indicate the UE 2 to receive the reference signal resource 1. In addition, the receiving indication may be further used to indicate a reference signal-sending device, for example, indicate that the UE 1 or UE 0 (that is, the base station) is a reference signal-sending device.

A message format of the receiving indication may be as follows:
"Resource 1:
Transmission-reception indication--------reception
Transmission device index--------UE 1 or UE 0 (gNB)".

It may be understood that, when the first configuration information is the device-level configuration information, first configuration information sent by the network device to the first device and the second device may be the same or different.

In Manner 3, the first configuration information is the device group-level configuration information, and the first configuration information may be used to indicate at least one first device in a group of devices to send a reference signal and indicate at least one second device in the group of devices to receive the reference signal.

For example, the first configuration information may include a plurality of pieces of configuration information, and each piece of configuration information includes one first identifier, one second identifier, and a reference signal resource identifier. Each piece of configuration information may be used to indicate a first device in a communication group to send a reference signal and indicate a second device in the communication group to receive the reference signal. For example, it is assumed that the configuration information is in at least one row shown in Table 6. With reference to Table 1, it can be learned that a first piece of configuration information may indicate the terminal 1 to send an RS 1, and indicate the terminal 2 to receive the RS 1; a fifth piece of configuration information may indicate the terminal 1 to send an RS 5, and indicate the terminal 3 to receive the RS 5; and so on. Other examples are not enumerated herein.

**Table 6**

| Configuration information | Reference signal resource identifier | First identifier | Second identifier |
|---|---|---|---|
| First piece | RS 1 | 1 | 2 |
| ... | ... | ... | ... |
| Fourth piece | RS 4 | 1 | 2 |
| Fifth piece | RS 5 | 1 | 3 |
| ... | ... | ... | ... |
| Eighth piece | RS 8 | 1 | 3 |

In this way, one piece of first configuration information may indicate a plurality of devices to perform channel measurement, so that signaling overheads are reduced, thereby improving communication performance. For example, the reference signal sent by the terminal 1 may be received by the terminal 2 and the terminal 3, so that channels of two or more communication pairs can be obtained by sending the reference signal once, thereby reducing reference signal overheads, reducing configuration information overheads, and improving communication performance.

It should be understood that when the first configuration information is the device group-level configuration information, first configuration information sent by the network device to all devices in a group of devices is the same.

Manner 4: The first configuration information further includes beam pair information, and the beam pair information indicates a transmit beam corresponding to the reference signal and/or a receive beam corresponding to the reference signal.

Optionally, the beam pair may include a transmit beam and/or a receive beam. The transmit beam may be precoding or a beam of the first device, or may be referred to as sending precoding. The receive beam may be precoding or a beam of the second device, or may be referred to as receiving precoding. When sending the reference signal to the second device, the first device may perform communication by using a beam in the beam pair, that is, the first device sends the reference signal to the second device by using a transmit beam in the beam pair, and/or the second device receives the reference signal from the first device by using a receive beam in the beam pair. For example, it is assumed that a terminal 1 is the first device, a terminal 2 is the second device, a transmit beam of the terminal 1 includes a beam 1 to a beam 8, and a receive beam of the terminal 2 includes a beam 1 to a beam 4. In this case, if beam pair information of a reference signal 1 in the first configuration information indicates that the transmit beam is the beam 1 and the receive beam is the beam 2, the beam pair information may indicate that a transmit beam corresponding to the reference signal 1 sent by the terminal 1 is the beam 1, and a receive beam corresponding to the reference signal 1 received by the terminal 2 is the beam 2.

In this way, the network device may determine and indicate a beam pair of a transmit beam and/or a receive beam for a reference signal between devices through global coordination, so that interference between reference signals of the devices can be reduced, thereby improving communication performance.

Manner 5: The first configuration information further includes a reference signal resource identifier, and the reference signal resource identifier is an identifier obtained through joint numbering of resources between communication groups. In other words, reference signal resource identifiers between different communication groups are numbered together.

For example, the first configuration information may include a plurality of reference signal resource identifiers, and a correspondence between each reference signal resource identifier and a communication group is shown in Table 7. With reference to Table 1, it can be learned that if the first configuration information includes an RS 1, the first configuration information may indicate a terminal 1 to send the RS 1 and indicate a terminal 3 to receive the RS 1; if the first configuration information includes an RS 2, the first configuration information may indicate the terminal 1 to send the RS 2 and indicate the terminal 3 to receive the RS 2, and so on. Other examples are not enumerated herein. It can be learned that, in Table 7, a plurality of different sending devices corresponding to one receiving device have different reference signal resource identifiers. In other words, that the reference signal resource identifier is an identifier obtained through joint numbering of resources between communication groups may be understood as that a plurality of different sending devices corresponding to one receiving device have different reference signal resource identifiers.

**Table 7**

| Reference signal resource identifier | First identifier | Second identifier |
|---|---|---|
| RS 1 | 1 | 3 |
| RS 2 | 1 | 3 |
| RS 3 | 1 | 3 |
| RS 4 | 1 | 3 |
| RS 5 | 2 | 3 |
| RS 6 | 2 | 3 |
| RS 7 | 2 | 3 |
| RS 8 | 2 | 3 |

The helps the second device compare channel states of different links, and helps the second device feed back a communication group with good performance in one or more communication groups that include the second device, so that the network device is helped to perform communication scheduling, thereby improving communication performance.

Manner 6: The first configuration information further includes a reference signal resource identifier, and the reference signal resource identifier is an identifier obtained through independent numbering of resources between communication groups. In other words, reference signal resource identifiers between different communication groups are separately numbered.

For example, the first configuration information may include a plurality of reference signal resource identifiers, and a correspondence between each reference signal resource identifier and a communication group is shown in Table 8. With reference to Table 1, it can be learned that if the first configuration information includes an RS 1, the first configuration information may indicate a terminal 1 to send the RS 1 and indicate a terminal 3 to receive the RS 1; if the first configuration information includes an RS 2, the first configuration information may indicate the terminal 1 to send the RS 2 and indicate the terminal 3 to receive the RS 2, and so on. Other examples are not enumerated herein. It can be learned that, in Table 8, a plurality of different sending devices corresponding to one receiving device may have a same reference signal resource identifier. In other words, that the reference signal resource identifier is an identifier obtained through independent numbering of resources between communication groups may be understood as that a plurality of different sending devices corresponding to one receiving device may have a same reference signal resource identifier.

**Table 8**

| Reference signal resource identifier | First identifier | Second identifier |
|---|---|---|
| RS 1 | 1 | 3 |
| RS 2 | 1 | 3 |
| RS 3 | 1 | 3 |
| RS 4 | 1 | 3 |
| RS 1 | 2 | 3 |
| RS 2 | 2 | 3 |
| RS 3 | 2 | 3 |
| RS 4 | 2 | 3 |

In this way, the first communication apparatus may configure different reference signal resources for different links, so that the configuration is more flexible; and the third communication apparatus may separately perform measurement feedback for the different links, so that processing complexity is reduced.

Manner 7: The first configuration information may be further used to indicate the second device to perform channel measurement by using the reference signal, and feed back CSI to the network device. The configuration of a resource for feeding back the CSI may be included in the first configuration information.

Manner 8: The first configuration information may be further used to indicate a reference signal resource location. In other words, in S1303, when determining the first configuration information, the network device may further determine a reference signal resource location, and allocate a reference signal resource to the first device and the second device. In this way, the network device may allocate the reference signal resource, so that flexible resource allocation can be implemented while communication latency is reduced, thereby improving communication performance.

It should be understood that Manner 1 to Manner 8 may be separately implemented, or may be implemented in a combination of more of the manners. This is not limited herein.

In the embodiment of the application, there may be one or more first devices, and/or there may be one or more second devices. For example, when the first configuration information is the device-level configuration information, there may be one first device, and there may be one second device. When the first configuration information is the device group-level configuration information, there may be one or more first devices, and there may be one or more second devices. In this way, reference signals sent by one device may be received by a plurality of devices, so that reference signal overheads are reduced. In addition, reference signals sent by a plurality of devices may be received by one device, so that channel measurement is achieved on different communication links, and the communication links are flexibly switched, thereby improving performance.

In the embodiment of the application, a configuration manner of the first configuration information may be semi-static configuration, periodic configuration, or aperiodic configuration. This is not limited herein.

Optionally, after S1305, the channel measurement method shown in FIG. 13 may further include the following steps.

S1306: The second device determines CSI based on the reference signal.

In the embodiment of the application, the CSI determined by the second device based on the reference signal may represent CSI of a channel on which the first device sends data to the second device.

Optionally, when the reference signal is an SRS, because there is reciprocity between two channels in opposite directions in one communication link (for example, an uplink channel and a downlink channel, or channels on two sides of a sidelink), the CSI determined by the second device based on the SRS may represent CSI of a channel on which the first device sends data to the second device, or may represent CSI of a channel on which the second device sends data to the first device.

S1307: The second device sends the CSI to the network device. Correspondingly, the network device receives the CSI sent by the second device.

Optionally, the CSI sent by the second device is CSI with optimal performance in a plurality of reference signals measured by the second device. In this way, for a plurality of communication groups that all include the second device, the network device may determine a communication group with optimal performance in the plurality of communication groups, so that the network device is helped to perform communication scheduling, thereby improving communication performance.

Optionally, the CSI sent by the second device includes information about a communication group and a reference signal resource identifier, and/or a reference signal resource identifier.

When the CSI sent by the second device includes the reference signal resource identifier, and the reference signal resource identifier is the identifier obtained through joint numbering of resources between communication groups (refer to Manner 5), the network device may be helped to quickly determine, based on the CSI, a reference signal corresponding to the CSI, and then quickly determine, based on the reference signal corresponding to the CSI and the reference signal resource identifier obtained through joint numbering, a communication group corresponding to the CSI. When the CSI sent by the second device includes the information about the communication group and the reference signal resource identifier, and the reference signal resource identifier is the identifier obtained through independent numbering of resources between communication groups (refer to Manner 6), the network device may be helped to quickly determine, based on the CSI, a communication group and a reference signal that correspond to the CSI.

The sidelink communication scenario shown in FIG. 14 is still used as an example. The channel measurement shown in FIG. 13 is applied, so that when the network device obtains CSI between the terminal 1 and the terminal 11, the following steps may be further included.

Step 12.4: The terminal 11 determines the CSI based on the reference signal.

Step 12.5 (refer to (3) in FIG. 14): The terminal 11 sends the CSI to the network device. Correspondingly, the network device receives the CSI sent by the terminal 11.

By comparing step 12.4 and step 12.5 with step 1.3 and step 1.4 described above, it can be learned that the second device may directly feed back the CSI to the network device, and the following procedure is not required: The second device first sends the CSI to the first device and then the first device sends the CSI to the network device. In this way, two CSI transmission processes can be reduced to one CSI transmission process, so that feedback information overheads are reduced, and communication latency is reduced, thereby improving communication performance.

The scenario shown in FIG. 14 or FIG. 15 may be considered as a two-layer topology structure (which may also be referred to as a double-layer topology structure or a two-layer structure) of URLLC. For the two-layer topology structure of URLLC, fast sidelink measurement and feedback can be implemented by using channel measurement methods (which may also be considered as a unified channel obtaining method) provided in embodiments of the application, and measurement and feedback of a controller (for example, the terminal 1) and a bottom-end device (for example, the terminal 11) can be implemented in only three steps (including step 1, where the network device sends configuration information to the controller and the bottom-end device; step 2, where the controller sends a reference signal, and the bottom-end device receives the reference signal to perform channel measurement; and step 3, where the bottom-end device feeds back CSI to the network device), so that latency can be reduced, and reference signal overheads can be reduced, thereby reducing feedback overheads. In addition, the network device schedules CSI measurement and feedback for sidelink communication, so that flexible resource allocation can be implemented while latency is reduced, thereby improving communication performance.

Optionally, the second device may further send a reference signal to the network device. For example, as shown in FIG. 14, the terminal 11 may further send a reference signal to the network device. For another example, in FIG. 15, the terminal 11 may further send a reference signal to the network device. In this way, the network device may be helped to determine the CSI between the network device and the second device based on the reference signal.

Optionally, in addition to determining and delivering the first configuration information, the network device may further determine and deliver second configuration information used to configure link information. For example, the channel measurement method shown in FIG. 13 may further include the following steps.

S1301: The network device determines second configuration information.

The second configuration information is used to configure link information. The link information includes at least one of a link number, link type information, a link sending device identifier, and a link receiving device identifier.

For the link number, the link type information, the link sending device identifier, and the link receiving device identifier, refer to related descriptions in Example 5 to Example 7. Details are not described herein again.

In S1301, information included in the link information may have at least the following several cases.

Case 1: The link information includes the link number, the link sending device identifier, and the link receiving device identifier.

In other words, in Case 1, the network device may indicate the at least one second correspondence to a device by using the second configuration information.

Case 2: The link information includes the link number and the link type information.

A correspondence may exist between the link number and the link type information. In other words, in Case 2, the network device may indicate the correspondence between the link number and the link type information to a device by using the second configuration information.

Case 3: The link information includes the link number, the link type information, the link sending device identifier, and the link receiving device identifier.

In other words, in Case 3, the network device may indicate the at least one first correspondence and the at least one second correspondence to a device by using the second configuration information.

Case 4: The link information includes the link type information, the link sending device identifier, and the link receiving device identifier.

In other words, in Case 4, the network device may indicate the at least one first correspondence to a device by using the second configuration information.

It should be understood that, in any one of Case 1 to Case 4, the link information may be preconfigured for the first device and the second device, to prepare for performing S1303 to S1305 by the network device. In this way, in a process in which the network device performs S1303 to S1305, the first device and the second device may determine the indication of the first configuration information based on the link information, to implement the channel measurement method provided in the embodiment of the application.

S1302: The network device sends the second configuration information to the first device and the second device. Correspondingly, the first device receives the second configuration information sent by the network device, and the second device receives the second configuration information sent by the network device.

The second configuration information sent by the network device to the first device may be the same as or different from the second configuration information sent by the network device to the second device. This is not limited herein. When the second configuration information sent by the network device to the first device is different from the second configuration information sent by the network device to the second device, the second configuration information may include configuration information 3 and configuration information 4. The network device sends the configuration information 3 to the first device, and sends the configuration information 4 to the second device. The configuration information 3 is used to configure first link information, and the configuration information 4 is used to configure second link information. In other words, when the second configuration information sent by the network device to the first device is different from the second configuration information sent by the network device to the second device, different link information can be configured for different devices, thereby improving information configuration flexibility.

Optionally, step S1301 and step S1302 may be performed before S1303, or may be performed simultaneously with S1303. This is not specifically limited in the application.

Optionally, the network device may simultaneously send the second configuration information and the first configuration information. This is not specifically limited in the application.

Optionally, in the channel measurement method shown in FIG. 13, the reference signal may include a CSI-RS and/or an SRS. The following examples are separately used for description.

For example, when the reference signal is the CSI-RS, the application provides an embodiment, to perform channel measurement by using the CSI-RS based on the channel measurement method shown in FIG. 13. FIG. 16 is a schematic diagram 2 of interaction in a channel measurement method according to an embodiment of the application. The channel measurement method may be applied to the foregoing communication system, and may be performed by the network device, the first device, or the second device in the foregoing communication system. The method may include S1601 to S1605, which are sequentially described below.

S1601: A network device determines CSI-RS configuration information.

The CSI-RS configuration information herein may be understood as the first configuration information. For a specific implementation thereof, refer to the implementation of the first configuration information. Details are not described herein again.

S1602: The network device sends the CSI-RS configuration information to the first device and the second device. Correspondingly, the first device receives the CSI-RS configuration information sent by the network device, and the second device receives the CSI-RS configuration information sent by the network device.

S1603: The first device sends a CSI-RS to the second device. Correspondingly, the second device receives the CSI-RS sent by the first device.

S1604: The second device determines CSI based on the CSI-RS.

The CSI determined by the second device based on the CSI-RS may represent CSI of a channel on which the first device sends data to the second device.

S1605: The second device sends the CSI to the network device. Correspondingly, the network device receives the CSI sent by the second device.

In the channel measurement method shown in FIG. 16, for specific implementations of S1601 to S1605, respectively refer to S1303 to S1307 shown in FIG. 13. Details are not described herein again. In addition, for an effect of the method shown in FIG. 16, refer to the method shown in FIG. 13.

For example, when the reference signal is the SRS, the application provides an embodiment, to perform channel measurement by using the SRS based on the channel measurement method shown in FIG. 13. FIG. 17 is a schematic diagram 3 of interaction in a channel measurement method according to an embodiment of the application. The channel measurement method may be applied to the foregoing communication system, and may be performed by the network device, the first device, or the second device in the foregoing communication system. The method may include S1701 to S1705, which are sequentially described below.

S1701: A network device determines SRS configuration information.

The SRS configuration information herein may be understood as the first configuration information. For a specific implementation thereof, refer to the implementation of the first configuration information. Details are not described herein again.

S1702: The network device sends the SRS configuration information to the first device and the second device. Correspondingly, the first device receives the SRS configuration information sent by the network device, and the second device receives the SRS configuration information sent by the network device.

S1703: The first device sends an SRS to the second device. Correspondingly, the second device receives the SRS sent by the first device.

S1704: The second device determines CSI based on the SRS.

The CSI determined by the second device based on the SRS may represent CSI of a channel on which the first device sends data to the second device, or may represent CSI of a channel on which the second device sends data to the first device.

S1705: The second device sends the CSI to the network device. Correspondingly, the network device receives the CSI sent by the second device.

In the channel measurement method shown in FIG. 17, for specific implementations of S1701 to S1705, respectively refer to S1301 to S1307 shown in FIG. 13. Details are not described herein again. For an effect of the method shown in FIG. 17, refer to the method shown in FIG. 13.

In addition, in the method shown in FIG. 17, there is reciprocity between two channels in opposite directions (for example, an uplink channel and a downlink channel, or channels on two sides of a sidelink), so that the CSI determined by the second device based on the SRS may represent CSI of the two channels in opposite directions. For example, the second device may determine, based on the SRS, CSI used when the first device sends a signal to the second device, or may determine, based on the SRS, CSI used when the second device sends a signal to the first device. Further, the network device may perform data transmission between the first device and the second device based on the determined CSI.

For example, when the terminal 1 needs to send data to the terminal 11, the network device may configure the terminal 1 to send a CSI-RS to the terminal 11, that is, the first device is the terminal 1, the second device is the terminal 11, and the terminal 11 determines CSI based on the CSI-RS and feeds back the CSI to the network device. The network device may determine CSI for sending a signal by the terminal 1 and the terminal 11, and perform unified scheduling to implement data transmission between the terminal 1 and the terminal 11.

For example, when the terminal 1 needs to send data to the terminal 11, if CSI for sending a signal by the terminal 1 to the terminal 11 is the same as or similar to CSI for sending a signal by the terminal 11 to the terminal 1 (or channels in two directions have reciprocity), the network device may configure the terminal 11 to send an SRS to the terminal 1, that is, the first device is the terminal 11, the second device is the terminal 1, and the terminal 1 determines CSI based on the SRS and feeds back the CSI to the network device. The network device may determine CSI for sending a signal by the terminal 1 and the terminal 11, and perform unified scheduling to implement data transmission between the terminal 1 and the terminal 11.

For example, when the reference signal includes the CSI-RS and the SRS, the application provides an embodiment, to perform channel measurement by using the CSI-RS and the SRS based on the channel measurement method shown in FIG. 13. A specific implementation of the embodiment may be implemented by combining the methods shown in FIG. 16 and FIG. 17.

It may be further understood that the reference signal in the channel measurement method shown in FIG. 13 may alternatively be another reference signal, for example, a reference signal used for sensing. This is not limited in the embodiment of the application.

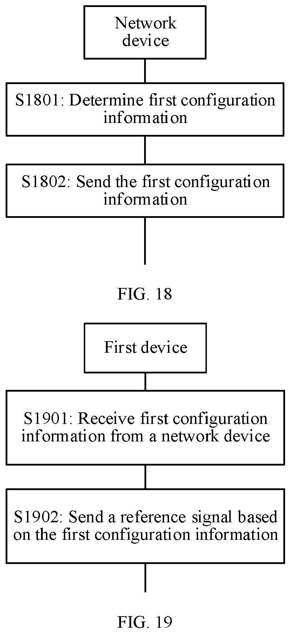

Based on the methods shown in FIG. 13, FIG. 16, and FIG. 17, alternatively, as shown in FIG. 18, the channel measurement method provided in embodiments of the application may be described from a perspective of the network device.

FIG. 18 is a schematic diagram 4 of interaction in a channel measurement method according to an embodiment of the application. As shown in FIG. 18, the method may include the following steps.

S1801: A network device determines first configuration information.

S 1802: The network device sends the first configuration information.

Specifically, for descriptions of the first configuration information, refer to the descriptions of the first configuration information in S1303. For related descriptions of S1801 and S1802, refer to S1303 and S1304. Details are not described again.

Based on the methods shown in FIG. 13, FIG. 16, and FIG. 17, alternatively, as shown in FIG. 19, the channel measurement provided in embodiments of the application may be described from a perspective of the first device.

S1901: The first device receives first configuration information from a network device.

S 1902: The first device sends a reference signal based on the first configuration information.

Specifically, for descriptions of the first configuration information, refer to the descriptions of the first configuration information in S1303. For related descriptions of S1901 and S1902, refer to S1304 and S1305. Details are not described again.

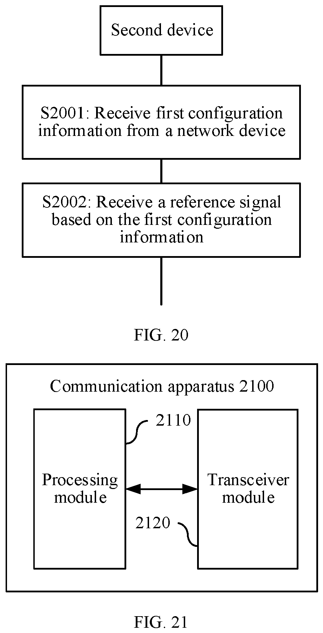

Based on the methods shown in FIG. 13, FIG. 16, and FIG. 17, alternatively, as shown in FIG. 20, the channel measurement provided in embodiments of the application may be described from a perspective of the second device.

S2001: The second device receives first configuration information from a network device.

S2002: The second device receives a reference signal based on the first configuration information.

Specifically, for descriptions of the first configuration information, refer to the descriptions of the first configuration information in S1303. For related descriptions of S2001 and S2002, refer to S1304 and S1306. Details are not described again.

It should be noted that the first configuration information in S 1901 and S2001 may be same configuration information, or may be different configuration information. When the configuration information is different, for example, the first configuration information may include third configuration information and fourth configuration information, the third configuration information is configuration information of the first device, and the fourth configuration information is configuration information of the second device. When the first configuration information in S1901 and S2001 is different configuration information, S1303 in FIG. 13 may be further replaced with S2101 and S2102 below, and S1304 in FIG. 13 may be further replaced with S2103 and S2104 below.

S2101: The network device determines third configuration information. Optionally, the step may be omitted.

S2102: The network device determines fourth configuration information. Optionally, the step may be omitted.

S2103: The network device sends the third configuration information to the first device. Correspondingly, the first device receives the third configuration information.

S2104: The network device sends the fourth configuration information to the second device. Correspondingly, the second device receives the fourth configuration information.

The third configuration information may be used to indicate the first device to send a reference signal, the reference signal is used for channel measurement, the third configuration information includes information about a communication group, the information about a communication group is used to determine the first device and/or the second device, and the communication group includes the first device and the second device. The fourth configuration information may be used to indicate the second device to receive the reference signal, the reference signal is used for channel measurement, the fourth configuration information includes the information about the communication group, the information about the communication group is used to determine the first device and/or the second device, and the communication group includes the first device and the second device.

Specifically, for descriptions of the third configuration information and the fourth configuration information, refer to the descriptions of the first configuration information in S1303. Details are not described again.

It should be noted that there is no limitation on a sequence of performing S2101 and S2102. S2101 may be performed before S2102, S2102 may be performed before S2101, or S2101 and S2102 are simultaneously performed. This is not limited. There is no limitation on a sequence of performing S2103 and S2104. S2103 may be performed before S2104, S2103 may be performed before S2104, or S2103 and S2104 are simultaneously performed. This is not limited.

Correspondingly, S1902 in FIG. 19 may be replaced with S2105 below, and S2002 in FIG. 20 may be replaced with S2106 below.

S2105: The first device sends a reference signal based on the third configuration information.

S2106: The second device receives the reference signal based on the fourth configuration information.

Based on the methods in FIG. 13 and FIG. 16 to FIG. 20, the network device may adjust a transmit-end device and a receive-end device of the reference signal by adjusting the information about the communication group in the configuration information, to flexibly switch the transmit-end device and the receive-end device, implement unified CSI measurement of communication links and flexible switching between the communication links, quickly obtain CSI, and reduce latency, thereby improving communication performance.

The foregoing describes in detail the channel measurement method provided in embodiments of the application with reference to FIG. 1 to FIG. 20. With reference to FIG. 21, the following describes in detail a communication apparatus configured to perform the channel measurement method provided in embodiments of the application.

As shown in FIG. 21, an embodiment of the application provides a communication apparatus 2100. The communication apparatus 2100 may be a network device, a first device, or a second device, may be an apparatus in the network device, the first device, or the second device, or an apparatus that can be used in a matching manner with the network device, the first device, or the second device. In a possible implementation, the communication apparatus 2100 may include a one-to-one corresponding module or unit for performing the method/operation/step/action performed by the network device, the first device, or the second device in the foregoing method embodiments. The unit may be a hardware circuit, may be software, or may be implemented by a hardware circuit in combination with software.

In a possible implementation, the communication apparatus 2100 may include a processing module 2110 and a transceiver module 2120. For ease of description, FIG. 21 shows only main parts of the communication apparatus.

In some embodiments, the communication apparatus 2100 may be applied to the communication system shown in FIG. 6, and perform functions of the network device in the channel measurement methods shown in FIG. 13, FIG. 16, and FIG. 17. In this case, the communication apparatus 2100 may be understood as the first communication apparatus.

The processing module 2110 is configured to determine first configuration information. The first configuration information is used to indicate the second communication apparatus to send a reference signal and indicate the third communication apparatus to receive the reference signal, the reference signal is used for channel measurement, the first configuration information includes information about a communication group, the information about the communication group is used to determine the second communication apparatus and the third communication apparatus, and the communication group includes the second communication apparatus and the third communication apparatus. The transceiver module 2120 is configured to send the first configuration information.

The processing module 2110 may be further configured to change the information about the communication group, to change the second communication apparatus and the third communication apparatus that are determined by using the information about the communication group.

Types of the second communication apparatus and the third communication apparatus may be any one of devices such as a base station, a terminal device, a satellite, an IAB node, a relay node, and CPE.

In a possible implementation, the transceiver module 2120 is further configured to send second configuration information, where the second configuration information is used to configure link information. The link information includes at least one of a link number, link type information, a link sending device identifier, and a link receiving device identifier.

In a possible implementation, the information about the communication group includes one or more of the following: a first identifier, a second identifier, link type information, and a link number. The first identifier corresponds to the second communication apparatus, and the second identifier corresponds to the third communication apparatus.

Optionally, the first identifier is any one of a device-level identifier, a device group-level identifier, or a broadcast-level identifier. The second identifier is any one of a device-level identifier, a device group-level identifier, or a broadcast-level identifier.

In a possible implementation, the information about the communication group includes a reference signal resource identifier, and a correspondence exists between the reference signal resource identifier and the communication group.

In a possible implementation, the first configuration information is device-level configuration information or device group-level configuration information.

Optionally, the first configuration information is the device-level configuration information, and the first configuration information includes a sending reference signal resource list and a receiving reference signal resource list. The sending reference signal resource list is used to indicate to send the reference signal, and the receiving reference signal resource list is used to indicate to receive the reference signal.

Optionally, the first configuration information is the device group-level configuration information, and the first configuration information is used to indicate at least one second communication apparatus in one group of devices to send the reference signal and indicate at least one third communication apparatus in the group of devices to receive the reference signal.

Further, the first configuration information is group RRC signaling, and the group RRC signaling is carried on a group physical shared channel scheduled by using control information scrambled by using a group identifier; or the first configuration information is group physical layer control information, and the group physical layer control information is scrambled by using a group identifier. The group identifier may be a G-RNTI.

In a possible implementation, the first configuration information further indicates a reference signal resource location.

In a possible implementation, the first configuration information further includes beam pair information, and the beam pair information indicates a transmit beam corresponding to the reference signal and/or a receive beam corresponding to the reference signal.

In a possible implementation, the first configuration information further includes a reference signal resource identifier, and the reference signal resource identifier is an identifier obtained through joint numbering of resources between communication groups.

In a possible implementation, the first configuration information further includes a reference signal resource identifier, and the reference signal resource identifier is an identifier obtained through independent numbering of resources between communication groups.

In a possible implementation, the transceiver module 2120 is further configured to receive CSI sent by the third communication apparatus.

Optionally, the CSI sent by the third communication apparatus is CSI with optimal performance in a plurality of reference signals measured by the third communication apparatus.

Optionally, the CSI sent by the third communication apparatus includes information about a communication group and/or a reference signal resource identifier.

In a possible implementation, the reference signal includes a CSI-RS and/or an SRS. Optionally, the reference signal may be another reference signal, for example, a reference signal used for sensing.

In a possible implementation, the first configuration information is carried in physical layer signaling and/or higher layer signaling. The physical layer signaling includes DCI or RxCI, and the higher layer signaling includes RRC signaling or MAC CE signaling.

In a possible implementation, there are one or more second communication apparatuses, and/or there are one or more third communication apparatuses.

In some other embodiments, the communication apparatus 2100 may be applied to the communication system shown in FIG. 6, and perform functions of the first device in the channel measurement methods shown in FIG. 13, FIG. 16, and FIG. 17. In this case, the communication apparatus 2100 may be understood as the second communication apparatus.

The transceiver module 2120 is configured to receive first configuration information from the first communication apparatus. The first configuration information is used to indicate the second communication apparatus to send a reference signal and indicate the third communication apparatus to receive the reference signal, the reference signal is used for channel measurement, the first configuration information includes information about a communication group, the information about the communication group is used to determine the second communication apparatus and the third communication apparatus, and the communication group includes the second communication apparatus and the third communication apparatus. The processing module 2110 is configured to control, based on the first configuration information, the transceiver module 2120 to send the reference signal.

Types of the second communication apparatus and the third communication apparatus may be any one of devices such as a base station, a terminal device, a satellite, an IAB node, a relay node, and CPE.

In a possible implementation, the transceiver module 2120 is further configured to receive second configuration information from the first communication apparatus, where the second configuration information is used to configure link information. The link information includes at least one of a link number, link type information, a link sending device identifier, and a link receiving device identifier.

In a possible implementation, the information about the communication group includes one or more of the following: a first identifier, a second identifier, link type information, and a link number. The first identifier corresponds to the second communication apparatus, and the second identifier corresponds to the third communication apparatus.

Optionally, the first identifier is any one of a device-level identifier, a device group-level identifier, or a broadcast-level identifier. The second identifier is any one of a device-level identifier, a device group-level identifier, or a broadcast-level identifier.

In a possible implementation, the information about the communication group includes a reference signal resource identifier, and a correspondence exists between the reference signal resource identifier and the communication group.

In a possible implementation, the first configuration information is device-level configuration information or device group-level configuration information.

Optionally, the first configuration information is the device-level configuration information, and the first configuration information includes a sending reference signal resource list and a receiving reference signal resource list. The sending reference signal resource list is used to indicate to send the reference signal, and the receiving reference signal resource list is used to indicate to receive the reference signal.

Optionally, the first configuration information is the device group-level configuration information, and the first configuration information is used to indicate at least one second communication apparatus in one group of devices to send the reference signal and indicate at least one third communication apparatus in the group of devices to receive the reference signal.

Further, the first configuration information is group RRC signaling, and the group RRC signaling is carried on a group physical shared channel scheduled by using control information scrambled by using a group identifier; or the first configuration information is group physical layer control information, and the group physical layer control information is scrambled by using a group identifier. The group identifier may be a G-RNTI.

In a possible implementation, the first configuration information further indicates a reference signal resource location.

In a possible implementation, the first configuration information further includes beam pair information, and the beam pair information indicates a transmit beam corresponding to the reference signal and/or a receive beam corresponding to the reference signal.

In a possible implementation, the first configuration information further includes a reference signal resource identifier, and the reference signal resource identifier is an identifier obtained through joint numbering of resources between communication groups.

In a possible implementation, the first configuration information further includes a reference signal resource identifier, and the reference signal resource identifier is an identifier obtained through independent numbering of resources between communication groups.

In a possible implementation, the reference signal includes a CSI-RS and/or an SRS. Optionally, the reference signal may be another reference signal, for example, a reference signal used for sensing.

In a possible implementation, the first configuration information is carried in physical layer signaling and/or higher layer signaling. The physical layer signaling may be physical layer control information, the physical layer control information may include DCI or RxCI, and the higher layer signaling may include RRC signaling or MAC CE signaling.

In a possible implementation, there are one or more second communication apparatuses, and/or there are one or more third communication apparatuses.

In some other embodiments, the communication apparatus 2100 may be applied to the communication system shown in FIG. 6, and perform functions of the second device in the channel measurement methods shown in FIG. 13, FIG. 16, and FIG. 17. In this case, the communication apparatus 2100 may be understood as the third communication apparatus.

The transceiver module 2120 is configured to receive first configuration information from the first communication apparatus. The first configuration information is used to indicate the second communication apparatus to send a reference signal and indicate the third communication apparatus to receive the reference signal, the reference signal is used for channel measurement, the first configuration information includes information about a communication group, the information about the communication group is used to determine the second communication apparatus and the third communication apparatus, and the communication group includes the second communication apparatus and the third communication apparatus. The processing module 2110 is configured to control, based on the first configuration information, the transceiver module 2120 to receive the reference signal.

Types of the second communication apparatus and the third communication apparatus may be any one of devices such as a base station, a terminal device, a satellite, an IAB node, a relay node, and CPE.

In a possible implementation, the transceiver module 2120 is further configured to receive second configuration information from the first communication apparatus, where the second configuration information is used to configure link information. The link information includes at least one of a link number, link type information, a link sending device identifier, and a link receiving device identifier.

In a possible implementation, the information about the communication group includes one or more of the following: a first identifier, a second identifier, link type information, and a link number. The first identifier corresponds to the second communication apparatus, and the second identifier corresponds to the third communication apparatus.

Optionally, the first identifier is any one of a device-level identifier, a device group-level identifier, or a broadcast-level identifier. The second identifier is any one of a device-level identifier, a device group-level identifier, or a broadcast-level identifier.

In a possible implementation, the information about the communication group includes a reference signal resource identifier, and a correspondence exists between the reference signal resource identifier and the communication group.

In a possible implementation, the first configuration information is device-level configuration information or device group-level configuration information.

Optionally, the first configuration information is the device-level configuration information, and the first configuration information includes a sending reference signal resource list and a receiving reference signal resource list. The sending reference signal resource list is used to indicate to send the reference signal, and the receiving reference signal resource list is used to indicate to receive the reference signal.

Optionally, the first configuration information is the device group-level configuration information, and the first configuration information is used to indicate at least one second communication apparatus in one group of devices to send the reference signal and indicate at least one third communication apparatus in the group of devices to receive the reference signal.

Further, the first configuration information is group RRC signaling, and the group RRC signaling is carried on a group physical shared channel scheduled by using control information scrambled by using a group identifier; or the first configuration information is group physical layer control information, and the group physical layer control information is scrambled by using a group identifier. The group identifier may be a G-RNTI.

In a possible implementation, the first configuration information further indicates a reference signal resource location.

In a possible implementation, the first configuration information further includes beam pair information, and the beam pair information indicates a transmit beam corresponding to the reference signal and/or a receive beam corresponding to the reference signal.

In a possible implementation, the first configuration information further includes a reference signal resource identifier, and the reference signal resource identifier is an identifier obtained through joint numbering of resources between communication groups.

In a possible implementation, the first configuration information further includes a reference signal resource identifier, and the reference signal resource identifier is an identifier obtained through independent numbering of resources between communication groups.

In a possible implementation, the processing module 2110 is further configured to determine CSI based on the reference signal.

In a possible implementation, the transceiver module 2120 is further configured to send the CSI to the first communication apparatus.

Optionally, the CSI sent by the third communication apparatus is CSI with optimal performance in a plurality of reference signals measured by the third communication apparatus.

Optionally, the CSI sent by the third communication apparatus includes information about a communication group and/or a reference signal resource identifier.

In a possible implementation, the reference signal includes a CSI-RS and/or an SRS. Optionally, the reference signal may be another reference signal, for example, a reference signal used for sensing.

In a possible implementation, the first configuration information is carried in physical layer signaling and/or higher layer signaling. The physical layer signaling may be physical layer control information, the physical layer control information may include DCI or RxCI, and the higher layer signaling may include RRC signaling or MAC CE signaling.

In a possible implementation, there are one or more second communication apparatuses, and/or there are one or more third communication apparatuses.

Optionally, the transceiver module 2120 may include a receiving module and a sending module (not shown in FIG. 21). The sending module is configured to implement a sending function of the communication apparatus 2100, and the receiving module is configured to implement a receiving function of the communication apparatus 2100.

Optionally, the communication apparatus 2100 may further include a storage module (not shown in FIG. 21), and the storage module stores a program or instructions. When the processing module 2110 executes the program or the instructions, the communication apparatus 2100 may be enabled to perform functions of the network device, the first device, or the second device in the channel measurement methods shown in FIG. 13, FIG. 16, and FIG. 17.

It should be understood that, the processing module 2110 in the communication apparatus 2100 may be implemented by a processor or a processor-related circuit component, and may be a processor or a processing unit, and the transceiver module 2120 may be implemented by a transceiver or a transceiver-related circuit component, and may be a transceiver or a transceiver unit.

In addition, for technical effects of the communication apparatus 2100, refer to the technical effects of the channel measurement methods shown in FIG. 13, FIG. 16, and FIG. 17. Details are not described herein again.

If the communication apparatus 2100 provided in the embodiment of the application is a chip, the transceiver module 2120 in the communication apparatus 2100 may respectively correspond to input and output of the chip. For example, the receiving module in the transceiver module 2120 corresponds to input of the chip, and the sending module in the transceiver module 2120 corresponds to output of the chip. This is not limited in the application.

An embodiment of the application further provides a chip system. The chip system includes a processor, the processor is coupled to a memory, and the memory is configured to store a program or instructions. When the program or the instructions are executed by the processor, the chip system is enabled to implement the method according to any one of the foregoing method embodiments.

Optionally, there may be one or more processors in the chip system. The processor may be implemented through hardware, or may be implemented through software. When the processor is implemented through hardware, the processor may be a logic circuit, an integrated circuit, or the like. When the processor is implemented through software, the processor may be a general-purpose processor, and is implemented by reading software code stored in the memory.

Optionally, there may also be one or more memories in the chip system. The memory may be integrated with the processor, or may be disposed separately from the processor. This is not limited in the application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in the application.

For example, the chip system may be a field programmable gate array (field programmable gate array, FPGA), an ASIC, a system on chip (system on chip, SoC), a CPU, a network processor (network processor, NP), a digital signal processor (digital signal processor, DSP), a microcontroller (microcontroller unit, MCU), a programmable controller (programmable logic device, PLD), or another integrated chip.

An embodiment of the application provides a communication system. The communication system includes a network device, a first device, or a second device. The network device, the first device, or the second device may be combined to execute the foregoing method embodiments. For a specific execution process, refer to those of the foregoing method embodiments. Details are not described herein again.

The application further provides a computer-readable storage medium. The computer-readable storage medium stores a computer program. When the computer-readable storage medium is executed by a computer, functions of any one of the foregoing method embodiments are implemented.

The application further provides a computer program product. When the computer program product is executed by a computer, functions of any one of the foregoing method embodiments are implemented.

It should be understood that, in embodiments of the application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of the application may be a volatile memory or a nonvolatile memory, or may include a volatile memory and a nonvolatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM and serves as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented through software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of the application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

In the specification, claims, and accompanying drawings of the application, the terms "first", "second", "third", and the like are intended to distinguish between different objects but do not limit a particular order.

It should be understood that the term "and/or" in the specification describes only an association relationship between associated objects and represents that three relationships may exist. For example, A and/or B may represent the following three cases: Only A exists, both A and B exist, and only B exists. A and B may be singular or plural. In addition, the character "/" in the specification usually indicates an "or" relationship between the associated objects, but may also indicate an "and/or" relationship. For details, refer to the context for understanding.

In the application, at least one means one or more, and a plurality of means two or more. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of the application. The execution sequences of the processes should be determined according to functions and internal logic of the processes, and should not be construed as any limitation on the implementation processes of embodiments of the application.

A person of ordinary skill in the art may be aware that, in combination with the examples described in embodiments disclosed in the specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in the application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of the application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the application may be implemented in a form of a software product. The software product is stored in a storage medium, and includes several instructions for instructing a computer device (which may be a personal computer, a server, or a network device) to perform all or some of the steps of the methods described in embodiments of the application. The foregoing storage medium includes any medium that can store program code, such as a USB flash drive, a removable hard disk drive, a ROM, a RAM, a magnetic disk, or an optical disc.

## Claims

1. A channel measurement method, comprising:
determining, by a first communication apparatus, first configuration information, wherein
the first configuration information is used to indicate a second communication apparatus to send a reference signal and indicate a third communication apparatus to receive the reference signal, the reference signal is used for channel measurement, the first configuration information comprises information about a communication group, the information about a communication group is used to determine the second communication apparatus and the third communication apparatus, and the communication group comprises the second communication apparatus and the third communication apparatus; and
sending, by the first communication apparatus, the first configuration information.

2. The method according to claim 1, wherein the method further comprises:
sending, by the first communication apparatus, second configuration information, wherein the second configuration information is used to configure link information, and the link information comprises at least one of a link number, link type information, a link sending device identifier, and a link receiving device identifier.

3. A channel measurement method, comprising:
receiving, by a second communication apparatus, first configuration information from a first communication apparatus, wherein
the first configuration information is used to indicate the second communication apparatus to send a reference signal and indicate a third communication apparatus to receive the reference signal, the reference signal is used for channel measurement, the first configuration information comprises information about a communication group, the information about the communication group is used to determine the second communication apparatus and the third communication apparatus, and the communication group comprises the second communication apparatus and the third communication apparatus; and
sending, by the second communication apparatus, the reference signal based on the first configuration information.

4. The method according to claim 3, wherein the method further comprises:
receiving, by the second communication apparatus, second configuration information from the first communication apparatus, wherein the second configuration information is used to configure link information, and the link information comprises at least one of a link number, link type information, a link sending device identifier, and a link receiving device identifier.

5. A channel measurement method, comprising:
receiving, by a third communication apparatus, first configuration information from a first communication apparatus, wherein
the first configuration information is used to indicate a second communication apparatus to send a reference signal and indicate the third communication apparatus to receive the reference signal, the reference signal is used for channel measurement, the first configuration information comprises information about a communication group, the information about the communication group is used to determine the second communication apparatus and the third communication apparatus, and the communication group comprises the second communication apparatus and the third communication apparatus; and
receiving, by the third communication apparatus, the reference signal based on the first configuration information.

6. The method according to claim 5, wherein the method further comprises:
receiving, by the third communication apparatus, second configuration information from the first communication apparatus, wherein the second configuration information is used to configure link information, and the link information comprises at least one of a link number, link type information, a link sending device identifier, and a link receiving device identifier.

7. The method according to any one of claims 1 to 6, wherein the information about the communication group comprises one or more of the following: a first identifier, a second identifier, link type information, and a link number, the first identifier corresponds to the second communication apparatus, and the second identifier corresponds to the third communication apparatus.

8. The method according to claim 7, wherein the first identifier is any one of a device-level identifier, a device group-level identifier, or a broadcast-level identifier; and
the second identifier is any one of a device-level identifier, a device group-level identifier, or a broadcast-level identifier.

9. The method according to any one of claims 1 to 6, wherein the information about the communication group comprises a reference signal resource identifier, and a correspondence exists between the reference signal resource identifier and the communication group.

10. The method according to any one of claims 1 to 9, wherein the first configuration information is device-level configuration information or device group-level configuration information.

11. The method according to claim 10, wherein the first configuration information is the device-level configuration information, and the first configuration information comprises a sending reference signal resource list and a receiving reference signal resource list.

12. The method according to claim 10, wherein the first configuration information is the device group-level configuration information, and the first configuration information is used to indicate at least one second communication apparatus in one group of devices to send the reference signal and indicate at least one third communication apparatus in the group of devices to receive the reference signal.

13. The method according to any one of claims 1 to 12, wherein the first configuration information further comprises beam pair information, and the beam pair information indicates a transmit beam corresponding to the reference signal and/or a receive beam corresponding to the reference signal.

14. The method according to any one of claims 1 to 13, wherein the first configuration information further comprises the reference signal resource identifier, and the reference signal resource identifier is an identifier obtained through joint numbering of resources of communication groups.

15. A first communication apparatus, comprising a processing module and a transceiver module, wherein
the processing module is configured to determine first configuration information, wherein
the first configuration information is used to indicate a second communication apparatus to send a reference signal and indicate a third communication apparatus to receive the reference signal, the reference signal is used for channel measurement, the first configuration information comprises information about a communication group, the information about a communication group is used to determine the second communication apparatus and the third communication apparatus, and the communication group comprises the second communication apparatus and the third communication apparatus; and
the transceiver module is configured to send the first configuration information.

16. The apparatus according to claim 15, wherein the transceiver module is further configured to send second configuration information, wherein the second configuration information is used to configure link information, and the link information comprises at least one of a link number, link type information, a link sending device identifier, and a link receiving device identifier.

17. A second communication apparatus, comprising a processing module and a transceiver module, wherein
the transceiver module is configured to receive first configuration information from a first communication apparatus, wherein
the first configuration information is used to indicate the second communication apparatus to send a reference signal and indicate a third communication apparatus to receive the reference signal, the reference signal is used for channel measurement, the first configuration information comprises information about a communication group, the information about the communication group is used to determine the second communication apparatus and the third communication apparatus, and the communication group comprises the second communication apparatus and the third communication apparatus; and
the processing module is configured to control, based on the first configuration information, the transceiver module to send the reference signal.

18. The apparatus according to claim 17, wherein the transceiver module is further configured to receive second configuration information from the first communication apparatus, wherein the second configuration information is used to configure link information, and the link information comprises at least one of a link number, link type information, a link sending device identifier, and a link receiving device identifier.

19. A third communication apparatus, comprising a processing module and a transceiver module, wherein
the transceiver module is configured to receive first configuration information from a first communication apparatus, wherein
the first configuration information is used to indicate a second communication apparatus to send a reference signal and indicate the third communication apparatus to receive the reference signal, the reference signal is used for channel measurement, the first configuration information comprises information about a communication group, the information about a communication group is used to determine the second communication apparatus and the third communication apparatus, and the communication group comprises the second communication apparatus and the third communication apparatus; and
the processing module is configured to control, based on the first configuration information, the transceiver module to receive the reference signal.

20. The apparatus according to claim 19, wherein the transceiver module is further configured to receive second configuration information from the first communication apparatus, wherein the second configuration information is used to configure link information, and the link information comprises at least one of a link number, link type information, a link sending device identifier, and a link receiving device identifier.

21. The apparatus according to any one of claims 15 to 20, wherein the information about a communication group comprises one or more of the following: a first identifier, a second identifier, link type information, and a link number, the first identifier corresponds to the second communication apparatus, and the second identifier corresponds to the third communication apparatus.

22. The apparatus according to claim 21, wherein the first identifier is any one of a device-level identifier, a device group-level identifier, or a broadcast-level identifier; and
the second identifier is any one of a device-level identifier, a device group-level identifier, or a broadcast-level identifier.

23. The apparatus according to any one of claims 15 to 20, wherein the information about a communication group comprises a reference signal resource identifier, and a correspondence exists between the reference signal resource identifier and the communication group.

24. The apparatus according to any one of claims 15 to 23, wherein the first configuration information is device-level configuration information or device group-level configuration information.

25. The apparatus according to claim 24, wherein the first configuration information is the device-level configuration information, and the first configuration information comprises a sending reference signal resource list and a receiving reference signal resource list.

26. The apparatus according to claim 24, wherein the first configuration information is the device group-level configuration information, and the first configuration information is used to indicate at least one second communication apparatus in one group of devices to send the reference signal and indicate at least one third communication apparatus in the group of devices to receive the reference signal.

27. The apparatus according to any one of claims 15 to 26, wherein the first configuration information further comprises beam pair information, and the beam pair information indicates a transmit beam corresponding to the reference signal and/or a receive beam corresponding to the reference signal.

28. The apparatus according to any one of claims 15 to 27, wherein the first configuration information further comprises the reference signal resource identifier, and the reference signal resource identifier is an identifier obtained through joint numbering of resources between communication groups.

29. A communication apparatus, comprising a processor coupled to a memory, wherein the processor is configured to execute a computer program or instructions in the memory, to enable the method according to any one of claims 1 to 14 to be performed.

30. The apparatus according to claim 29, further comprising the memory.

31. The apparatus according to claim 29 or 30, further comprising a transceiver, configured to communicate with another apparatus.

32. A computer-readable storage medium, comprising a computer program or instructions; and when the computer program or the instructions are run on a computer, the method according to any one of claims 1 to 14 is enabled to be performed.

33. A computer program product comprising instructions; when the computer program product runs on a computer, the method according to any one of claims 1 to 14 is enabled to be performed.

34. A communication apparatus, configured to perform the method according to any one of claims 1 to 14.

35. A communication system, comprising the first communication apparatus according to any one of claims 15, 16, and 21 to 28, the second communication apparatus according to any one of claims 17, 18, and 21 to 28, and the third communication apparatus according to any one of claims 19 to 28.
